# FASCICULE DE BREVET EUROPEEN

(11) **EP 3 658 518 B1**
(45) Date de publication et mention de la délivrance du brevet: **25.08.2021**
(21) Numéro de dépôt: 18759159.9
(22) Date de dépôt: 25.07.2018
(51) Int. Cl.: C04B 28/04, C04B 24/26, C08F 216/14

(54) **COMPOSITION POLYMÉRIQUE AQUEUSE ET COPOLYMÈRE**
WÄSSRIGE POLYMERZUSAMMENSETZUNG UND COPOLYMER
AQUEOUS POLYMERIC COMPOSITION AND COPOLYMER

(30) Priorité: 28.07.2017 FR 1757232
(43) Date de publication de la demande: 03.06.2020
(73) Titulaire: Coatex, 69730 Genay (FR)
(72) Inventeur: CHAMPAGNE, Clémentine, 69300 Caluire-et-Cuire (FR); MELAS, Michel, 69250 Montanay (FR); PARRENIN, Laurie, 01480 Villeneuve (FR); SUAU, Jean-Marc, 69480 Lucenay (FR)
(74) Mandataire: Balmefrezol, Ludovic Francis Pierre
(86) Numéro de dépôt international: PCT/FR2018/051901
(87) Numéro de publication internationale: WO 2019/020935

(56) Documents cités:
- WO-A1-2016/146935
- US-A1- 2014 051 801
- US-A1- 2014 088 250

## Description

L'invention concerne une composition aqueuse comprenant un copolymère obtenu par une réaction de polymérisation particulière mettant en œuvre un monomère anionique comprenant une insaturation oléfinique polymérisable et une fonction acide carboxylique et un monomère de formule (I) :

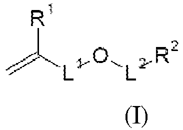

L'invention concerne également ce copolymère en tant que tel ainsi qu'un procédé pour sa préparation ainsi que son utilisation comme agent superplastifiant.

La composition selon l'invention est avantageusement utilisée dans le domaine technique des mortiers, des bétons, des plâtres ou d'autres compositions à base de composés ou de liants hydrauliques, spécialement de ciment ou de plâtre. De telles compositions peuvent avantageusement être mises en œuvre dans les domaines de la construction, des travaux publics ou de l'exploitation d'hydrocarbures.

Les composés dispersants de liants hydrauliques sont habituellement utilisés pour leur capacité à modifier la rhéologie du milieu dans lequel ils sont présents, notamment pour leur capacité à contrôler la maniabilité de ce milieu.

L'ouvrabilité est généralement définie comme la propriété d'une composition comprenant un liant hydraulique, notamment d'un laitier ou d'un coulis de ciment ou de mortier ou encore d'un béton, par exemple un béton prêt-à-l'emploi ou un béton de préfabrication, à rester maniable durant un temps aussi long que possible. De manière avantageuse, contrôler la maniabilité permet de transporter ou de déplacer la composition aqueuse comprenant le liant hydraulique, par exemple lors du transport ou du déplacement depuis un réservoir vers un autre réservoir. La maniabilité permet également de contrôler les conditions de stockage d'une telle composition aqueuse. Elle permet également de pouvoir pomper, voire de pomper facilement, cette composition. Contrôler la maniabilité d'une telle composition permet donc d'en améliorer les conditions d'utilisation, notamment d'augmenter sa durée d'utilisation dans des conditions satisfaisantes ou efficaces. Généralement, la maniabilité d'une composition aqueuse comprenant un liant hydraulique peut être évaluée par mesure du temps de fluidité du liant hydraulique. En particulier, le liant hydraulique ou l'agent superplastifiant devrait permettre d'obtenir une composition possédant une viscosité contrôlée et stable et, de préférence, une viscosité stable sur une période prolongée.

De manière préférée, l'amélioration de la maniabilité des compositions aqueuses hydrauliques comprenant un liant hydraulique devrait être possible pour des compositions comprenant une faible quantité d'eau.

Ainsi, un aspect important de l'invention réside dans la fourniture d'une composition aqueuse comprenant un liant hydraulique possédant un temps de maniabilité amélioré. Le contrôle de la maniabilité ne devrait pas conduire à une altération des autres propriétés, notamment des propriétés mécaniques, en particulier aux jeunes âges.

La maniabilité des compositions aqueuses comprenant un liant hydraulique peut être évaluée en mesurant l'affaissement (*slump* en anglais), par exemple selon la norme EN 12350-2. En effet, affaissement et maniabilité sont proportionnels.

La rétention de fluidité (*slump retention* en anglais) est également une propriété à contrôler pour les compositions aqueuses comprenant un liant hydraulique.

Ces propriétés sont particulièrement recherchées pour certaines applications, par exemple lors du remplissage d'un coffrage au moyen d'une composition aqueuse comprenant un liant hydraulique.

Un autre aspect de l'invention concerne l'obtention d'une composition aqueuse comprenant un liant hydraulique permettant de limiter ou de réduire le retrait lors du séchage.

L'amélioration des propriétés des compositions aqueuses comprenant un liant hydraulique devrait être obtenue sans modifier la prise de la composition, en particulier sans retarder cette prise.

Les compositions aqueuses comprenant un liant hydraulique devraient aussi posséder un rapport en poids eau/liant hydraulique, généralement eau/ciment ou E/C, le plus faible possible, sans pour autant subir une altération de leurs propriétés.

Un effet également recherché pour les compositions aqueuses comprenant un liant hydraulique est de permettre de contrôler la quantité d'air occlus dans le matériau résultant de la prise de cette composition, permettant ainsi d'éviter ou de réduire la présence d'agent anti-mousse au sein de la composition hydraulique.

De manière générale, les compositions aqueuses comprenant un liant hydraulique devraient permettre d'améliorer les propriétés mécaniques des matériaux obtenus, en particulier leurs propriétés mécaniques aux jeunes âges, propriétés qui peuvent être évaluées par mesure de l'évolution dans le temps de la résistance à la compression. Également, les composés utilisés pour la préparation de compositions aqueuses comprenant un liant hydraulique devraient être utilisés à des doses réduites.

Ils devraient également posséder une compatibilité élevée voire totale avec les autres composantes des compositions aqueuses comprenant un liant hydraulique, notamment en étant miscibles en toutes proportions avec ces autres composantes, afin d'éviter ou de limiter les risques de ségrégation des composantes de la composition aqueuse comprenant un liant hydraulique.

L'augmentation de la durée de maintien des propriétés des compositions aqueuses comprenant un liant hydraulique doit également être recherchée.

On connaît des composés dispersants ou agents superplastifiants utilisables dans des compositions aqueuses comprenant un liant hydraulique. Toutefois, ces composés ne permettent pas d'apporter de solution aux problèmes rencontrés. En particulier, ces composés ne permettent pas de maintenir un bon degré de fluidité initiale des compositions aqueuses comprenant un liant hydraulique dans lesquelles ils sont incorporés, tout en maintenant leur maniabilité et sans altérer leurs propriétés mécaniques, ni provoquer des phénomènes de ségrégation.

La demande WO 2016 146935 concerne l'utilisation d'un copolymère particulier pour augmenter la résistance mécanique d'une composition de béton. Ce copolymère est préparé en utilisant du DMDO qui est un dithiol. La demande US 2014 0088250 concerne une méthode de préparation de polymère en utilisant du dipropionate trithiocarbonate disodique. La demande US 2014 0051801 décrit un polymère peigne à base d'acide maléique.

Il existe donc un besoin de disposer de composés dispersants ou superplastifiants pour compositions aqueuses comprenant un liant hydraulique qui permettent d'apporter une solution à tout ou partie des composés de l'état de la technique.

L'invention permet d'apporter une solution à tout ou partie des problèmes rencontrés avec les compositions polymériques de l'état de la technique. Notamment, l'invention permet d'obtenir des copolymères par un procédé de préparation particulièrement efficace, par exemple pour ce qui concerne le contrôle de la température de la réaction de polymérisation. En particulier, il est essentiel de pouvoir disposer de procédés de préparation qui permettent de s'affranchir du maintien à basse température du milieu réactionnel mis en œuvre lors des réactions de polymérisation connues de l'état de la technique.

Par ailleurs, il est également essentiel de pouvoir disposer de procédés de préparation qui permettent de polymériser des monomères insaturés de différentes masses moléculaires Mw, par exemple de masse moléculaire Mw allant de 800 g/mol à 5 000 g/mol mesurée par CES, en présence de comonomères comprenant des fonctions vinyliques.

De même, il est essentiel de pouvoir mettre en œuvre des réactions de polymérisation permettant de copolymériser des monomères possédant des réactivités limitant ou empêchant leur polymérisation lors de la mise en œuvre des procédés de l'état de la technique.

Il est également essentiel de pouvoir contrôler ces réactions de polymérisation, en particulier de contrôler les proportions des comonomères polymérisés par rapport aux proportions de ces comonomères introduits lors de la réaction. Ainsi, les copolymères préparés peuvent comprendre des résidus des comonomères en des proportions identiques ou proches des proportions des monomères utilisés.

Ainsi, l'invention fournit une composition aqueuse comprenant au moins un copolymère dont l'indice de polymolécularité I_{P} est inférieur à 3, obtenu par au moins une réaction de polymérisation radicalaire dans l'eau et à une température allant de 10 à 90°C :
(a) d'au moins un monomère anionique comprenant au moins une insaturation oléfinique polymérisable et au moins une fonction acide carboxylique et
(b) d'au moins un monomère de formule (I) : 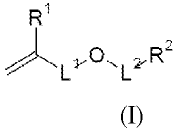 dans laquelle :
   - R¹ et R², identiques ou différents, représentent indépendamment H ou CH₃,
   - L¹ représente indépendamment un groupement choisi parmi CH₂, CH₂-CH₂ et O-CH₂-CH₂-CH₂-CH₂,
   - L² représente indépendamment un groupement choisi parmi (CH₂-CH₂O)ₓ, (CH₂CH(CH₃)O)_{y}, (CH(CH₂)CH₂O)_{z} et leurs combinaisons et
   - x, y et z, identiques ou différents, représentent indépendamment un nombre entier ou décimal compris entre 0 et 150 et la somme x+y+z est comprise entre 10 et 150,
en présence :
(i) de 0,05 à 5 % en poids, par rapport à la quantité de monomères, d'au moins un composé de formule (II) : 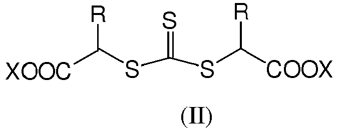 dans laquelle :
   - X représente indépendamment H, Na ou K et
   - R représente indépendamment un groupement Ci-Cs-alkyl et
(ii) d'au moins un composé générateur de radicaux choisi parmi peroxyde d'hydrogène, persulfate d'ammonium, persulfate de métal alcalin, et leurs mélanges ou associations avec bisulfite d'ammonium, avec un bisulfite de métal alcalin ou avec un ion choisi parmi Fe^{II}, Fe^{III}, Cu^{I}, Cu^{II}.

Les conditions de préparation de la composition selon l'invention sont particulièrement avantageuses. En effet, ces conditions de préparation de la composition selon l'invention permettent de réduire ou d'éviter la formation d'homopolymère du monomère (a). Ainsi, de manière préférée, la composition selon l'invention ne comprend pas d'homopolymère du monomère (a) par rapport à la quantité en poids sec de copolymère. De manière également préférée, la composition selon l'invention comprend une quantité en poids réduite, faible ou très faible d'homopolymère du monomère (a) par rapport à la quantité en poids sec de copolymère. De la même manière, l'invention permet d'éviter ou de fortement limiter la formation de copolymères de monomères (a) différents.

Selon l'invention, l'absence ou la présence d'une quantité réduite, faible ou très faible d'homopolymère du monomère (a) au sein de la composition selon l'invention permet d'éviter ou de limiter le risque d'inhibition de la cristallisation du béton lorsque la composition selon l'invention est utilisée pour ses propriétés plastifiantes au sein d'une formulation de béton. Généralement, un homopolymère du monomère (a) possède des propriétés dispersantes de particules de matière minérale et peut donc perturber ou inhiber la cristallisation au sein d'une formulation de béton. Les propriétés de la formulation de béton ou bien du matériau final préparé à partir de la formulation de béton peuvent alors être modifiées ou altérées.

De manière particulièrement avantageuse et particulièrement efficace, l'invention permet de préparer un copolymère à partir des monomères (a) et (b) tout en contrôlant la réaction de polymérisation des monomères (a) et (b). L'invention permet donc d'obtenir une composition aqueuse comprenant une quantité très faible de monomère résiduel (a) par rapport à la quantité en poids sec de copolymère. De manière préférée, la composition aqueuse selon l'invention comprend moins de 2 000 ppm en poids ou moins de 1 500 ppm en poids de monomère résiduel (a) par rapport à la quantité en poids sec de copolymère. De manière plus préférée, la composition aqueuse selon l'invention comprend moins de 1 000 ppm en poids ou moins de 500 ppm en poids de monomère résiduel (a) par rapport à la quantité en poids sec de copolymère. En particulier, la composition aqueuse selon l'invention peut comprendre moins de 200 ppm en poids ou moins de 100 ppm en poids de monomère résiduel (a) par rapport à la quantité en poids sec de copolymère.

La composition aqueuse selon l'invention comprend au moins un copolymère dont l'indice de polymolécularité I_{P} est inférieur à 3. De manière préférée selon l'invention, l'indice de polymolécularité I_{P} va de 1,5 à 3, plus préférentiellement de 1,8 à 2,8 ou de 1,8 à 2,5, bien plus préférentiellement de 2 à 2,8 ou de 2 à 2,5.

Le copolymère de la composition aqueuse selon l'invention est obtenu par au moins une réaction de polymérisation radicalaire dans l'eau et à une température allant de 10 à 90°C, de préférence allant de 30 à 85°C, plus préférentiellement à une température allant de 40 à 75°C ou de 50 à 70°C. Selon l'invention, la température peut également aller de 35 à 85°C, de 40 à 85°C, de 45 à 85°C, de 50 à 85°C, de 60 à 85°C ou de 35 à 70°C, de 40 à 70°C, de 45 à 70°C, de 50 à 70°C, de 60 à 70°C. De manière plus préférée, une seule réaction de polymérisation radicalaire est mise en œuvre.

La préparation de la composition aqueuse selon l'invention met en œuvre une réaction de polymérisation radicalaire qui est menée dans l'eau en présence de 0,05 à 5 % en poids d'au moins un composé de formule (II) par rapport à la quantité de monomères.

De manière préférée selon l'invention, ce composé est de formule (II) dans laquelle R représente un groupement C₁-C₃-alkyl, de préférence un groupement méthyl. Le composé de formule (II) préféré selon l'invention est le dipropionate trithiocarbonate disodique (DPTTC - numéro CAS 86470-33-2).

De manière également préférée selon l'invention, la réaction de polymérisation met en œuvre le composé de formule (II) en une quantité de 0,05 à 4 % en poids, de 0,05 à 3 % en poids, de 0,05 à 2 % en poids, de 0,5 à 4 % en poids, de 0,5 à 3 % en poids, de 0,5 à 2 % en poids, de 1 à 4 % en poids, de 1 à 3 % en poids, de 1 à 2 % en poids par rapport à la quantité de monomères.

La préparation de la composition aqueuse selon l'invention met également en œuvre au moins un composé générateur de radicaux qui est particulier. Il est préférentiellement choisi parmi peroxyde d'hydrogène, persulfate d'ammonium, persulfate de sodium, persulfate de potassium, leurs mélanges ou associations avec bisulfite de sodium, avec bisulfite de potassium ou avec un ion choisi parmi Fe^{II}, Fe^{III}, Cu^{I}, Cu^{II}. Selon l'invention, les ions Fe^{II}, Fe^{III}, Cu^{I} ou Cu^{II} peuvent être mis en œuvre au moyen d'au moins un composé choisi parmi sulfate de fer, sulfate de fer hydraté, sulfate de fer hemi-hydraté, sulfate de fer heptahydraté, carbonate de fer, carbonate de fer hydraté, carbonate de fer hemi-hydraté, chlorure de fer, carbonate de cuivre, carbonate de cuivre hydraté, carbonate de cuivre hemi-hydraté, acétate de cuivre, sulfate de cuivre, sulfate de cuivre pentahydraté, hydroxyde de cuivre, halogénure de cuivre.

Selon l'invention, le composé générateur de radicaux particulier est plus préférentiellement choisi parmi peroxyde d'hydrogène, persulfate d'ammonium, persulfate de sodium, persulfate de potassium, tout particulièrement persulfate de sodium.

Selon l'invention, la réaction de polymérisation est réalisée en l'absence de composé comprenant du phosphore au degré d'oxydation I, notamment en l'absence d'acide hypophosphoreux (H₃PO₂) ou bien d'un dérivé de l'acide hypophosphoreux (H₃PO₂), tels que les composés comprenant au moins un ion hypophosphite (H₂PO₂⁻), en particulier en l'absence d'un composé choisi parmi hypophosphite de sodium (H₂PO₂Na), hypophosphite de potassium (H₂PO₂K), hypophosphite de calcium ([H₂PO₂]₂Ca).

Lors de la préparation du copolymère selon l'invention, les quantités de monomères (a) et (b) mises en œuvre peuvent varier assez largement. De manière préférée, la réaction de polymérisation met en œuvre :
- de 1 à 25 % en poids de monomère (a) et
- de 75 à 99 % en poids de monomère (b).

De manière également préférée, la réaction de polymérisation met en œuvre :
- de 2 à 25 % en poids de monomère (a) et
- de 75 à 98 % en poids de monomère (b).

De manière également préférée, la réaction de polymérisation met en œuvre :
- de 3 à 15 % en poids de monomère (a) et
- de 85 à 97 % en poids de monomère (b).

De manière également préférée, la réaction de polymérisation met en œuvre :
- de 3 à 10 % en poids de monomère (a) et
- de 90 à 97 % en poids de monomère (b).

De manière également préférée, la réaction de polymérisation met en œuvre :
- de 5 à 10 % en poids de monomère (a) et
- de 90 à 95 % en poids de monomère (b).

L'invention comprend la mise en œuvre d'une réaction de polymérisation radicalaire dans l'eau d'au moins un monomère (a) anionique comprenant au moins une insaturation oléfinique polymérisable et au moins une fonction acide carboxylique ou d'un de ses sels. De préférence, la composition selon l'invention comprend un copolymère préparé par une réaction de polymérisation mettant en œuvre un monomère (a) anionique comprenant une insaturation oléfinique polymérisable et une fonction acide carboxylique ou d'un de ses sels. De manière plus préférée, le monomère (a) mis en œuvre est choisi parmi acide acrylique, acide méthacrylique, acide itaconique, acide maléique, un sel d'acide acrylique, un sel d'acide méthacrylique, un sel d'acide itaconique, un sel d'acide maléique et leurs mélanges. De manière bien plus préférée, le monomère (a) mis en œuvre est choisi parmi acide acrylique, acide méthacrylique, un sel d'acide acrylique, un sel d'acide méthacrylique et leurs mélanges, tout particulièrement acide acrylique ou un sel d'acide acrylique, en particulier un sel de sodium de l'acide acrylique.

Lors de la réaction de polymérisation radicalaire dans l'eau, l'invention comprend également la mise en œuvre d'au moins un monomère (b) de formule (I).

De manière préférée selon l'invention, le composé (b) est un composé (b1) de formule (I) dans laquelle :
- R¹ et R² représentent H,
- L¹ représente un groupement CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention, le composé (b) est un composé (b2) de formule (I) dans laquelle :
- R¹ représente H,
- R² représente CH₃,
- L¹ représente un groupement CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention, le composé (b) est un composé (b3) de formule (I) dans laquelle :
- R¹ représente CH₃,
- R² représente H,
- L¹ représente un groupement CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention, le composé (b) est un composé (b4) de formule (I) dans laquelle :
- R¹ et R² représentent CH₃,
- L¹ représente un groupement CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention le composé (b) est un composé (b5) de formule (I) dans laquelle :
- R¹ et R² représentent H,
- L¹ représente un groupement CH₂-CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention le composé (b) est un composé (b6) de formule (I) dans laquelle :
- R¹ représente H,
- R² représente CH₃,
- L¹ représente un groupement CH₂-CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention le composé (b) est un composé (b7) de formule (I) dans laquelle :
- R¹ représente CH₃,
- R² représente H,
- L¹ représente un groupement CH₂-CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention le composé (b) est un composé (b8) de formule (I) dans laquelle :
- R¹ et R² représentent CH₃,
- L¹ représente un groupement CH₂-CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention le composé (b) est un composé (b9) de formule (I) dans laquelle :
- R¹ et R² représentent H,
- L¹ représente un groupement O-CH₂-CH₂-CH₂-CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention le composé (b) est un composé (b10) de formule (I) dans laquelle :
- R¹ représente H,
- R² représente CH₃,
- L¹ représente un groupement O-CH₂-CH₂-CH₂-CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention le composé (b) est un composé (b11) de formule (I) dans laquelle :
- R¹ représente CH₃,
- R² représente H,
- L¹ représente un groupement O-CH₂-CH₂-CH₂-CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention le composé (b) est un composé (b12) de formule (I) dans laquelle :
- R¹ et R² représentent CH₃,
- L¹ représente un groupement O-CH₂-CH₂-CH₂-CH₂,
- L² représente un groupement combinant (CH₂-CH₂O)ₓ et (CH₂CH(CH₃)O)_{y} ou (CH(CH₃)CH₂O)_{z},
- x représente un nombre entier ou décimal compris entre 10 et 140,
- y+z représente un nombre entier ou décimal compris entre 10 et 140 et
- x est strictement supérieur à y+z et la somme x+y+z est comprise entre 10 et 150.

De manière préférée selon l'invention le composé (b) est un composé (bl3) de formule (I) dans laquelle :
- R¹ et R² représentent H,
- L¹ représente un groupement CH₂,
- L² représente un groupement (CH₂-CH₂O)ₓ et
- x représente un nombre entier ou décimal compris entre 10 et 140.

De manière préférée selon l'invention le composé (b) est un composé (b14) de formule (I) dans laquelle :
- R¹ représente H,
- R² représente CH₃,
- L¹ représente un groupement CH₂,
- L² représente un groupement (CH₂-CH₂O)ₓ et
- x représente un nombre entier ou décimal compris entre 10 et 140.

De manière préférée selon l'invention le composé (b) est un composé (b15) de formule (I) dans laquelle :
- R¹ représente CH₃,
- R² représente H,
- L¹ représente un groupement CH₂,
- L² représente un groupement (CH₂-CH₂O)ₓ et
- x représente un nombre entier ou décimal compris entre 10 et 140.

De manière préférée selon l'invention le composé (b) est un composé (b16) de formule (I) dans laquelle :
- R¹ et R² représentent CH₃,
- L¹ représente un groupement CH₂,
- L² représente un groupement (CH₂-CH₂O)ₓ et
- x représente un nombre entier ou décimal compris entre 10 et 140.

De manière préférée selon l'invention le composé (b) est un composé (b17) de formule (I) dans laquelle :
- R¹ et R² représentent H,
- L¹ représente un groupement CH₂-CH₂,
- L² représente un groupement (CH₂-CH₂O)ₓ et
- x représente un nombre entier ou décimal compris entre 10 et 140.

De manière préférée selon l'invention le composé (b) est un composé (b18) de formule (I) dans laquelle :
- R¹ représente H,
- R² représente CH₃,
- L¹ représente un groupement CH₂-CH₂,
- L² représente un groupement (CH₂-CH₂O)ₓ et
- x représente un nombre entier ou décimal compris entre 10 et 140.

De manière préférée selon l'invention le composé (b) est un composé (b19) de formule (I) dans laquelle :
- R¹ représente CH₃,
- R² représente H,
- L¹ représente un groupement CH₂-CH₂,
- L² représente un groupement (CH₂-CH₂O)ₓ et
- x représente un nombre entier ou décimal compris entre 10 et 140.

De manière préférée selon l'invention le composé (b) est un composé (b20) de formule (I) dans laquelle :
- R¹ et R² représentent CH₃,
- L¹ représente un groupement CH₂-CH₂,
- L² représente un groupement (CH₂-CH₂O)ₓ et
- x représente un nombre entier ou décimal compris entre 10 et 140.

De manière préférée selon l'invention le composé (b) est un composé (b21) de formule (I) dans laquelle :
- R¹ et R² représentent H,
- L¹ représente un groupement O-CH₂-CH₂-CH₂-CH₂,
- L² représente un groupement (CH₂-CH₂O)ₓ et
- x représente un nombre entier ou décimal compris entre 10 et 140.

De manière préférée selon l'invention le composé (b) est un composé (b22) de formule (I) dans laquelle :
- R¹ représente H,
- R² représente CH₃,
- L¹ représente un groupement O-CH₂-CH₂-CH₂-CH₂,
- L² représente un groupement (CH₂-CH₂O)ₓ et
- x représente un nombre entier ou décimal compris entre 10 et 140.

De manière préférée selon l'invention le composé (b) est un composé (b23) de formule (I) dans laquelle :
- R¹ représente CH₃,
- R² représente H,
- L¹ représente un groupement O-CH₂-CH₂-CH₂-CH₂,
- L² représente un groupement (CH₂-CH₂O)ₓ et
- x représente un nombre entier ou décimal compris entre 10 et 140.

De manière préférée selon l'invention le composé (b) est un composé (b24) de formule (I) dans laquelle :
- R¹ et R² représentent CH₃,
- L¹ représente un groupement O-CH₂-CH₂-CH₂-CH₂,
- L² représente un groupement (CH₂-CH₂O)ₓ et
- x représente un nombre entier ou décimal compris entre 10 et 140.

De manière préférée, le composé (b) de formule (I) est un composé pour lequel :
- x représente un nombre entier ou décimal compris entre 15 et 140,
- y+z représente un nombre entier ou décimal compris entre 10 et 135 et
- x est strictement supérieur à y+z et la somme x+y+z est comprise entre 10 et 150.

De manière plus préférée, le composé (b) est un composé de formule (I) pour laquelle x représente un nombre entier ou décimal compris entre 10 et 150 ou entre 30 et 120, y+z représente un nombre entier ou décimal compris entre 10 et 135, x est strictement supérieur à y+z et la somme x+y+z est comprise entre 10 et 150.

De manière également plus préférée, le composé (b) est un composé de formule (I) pour laquelle x représente un nombre entier ou décimal compris entre 20 et 130 ou entre 30 et 120 et y et z représentent 0.

De manière également plus préférée, le composé (b) est un composé de formule (I) pour laquelle x représente un nombre entier ou décimal compris entre 15 et 80 et y+z représente un nombre entier ou décimal compris entre 10 et 65, de préférence un composé de formule (I) pour laquelle x représente un nombre entier ou décimal compris entre 30 et 65 et y+z représente un nombre entier ou décimal compris entre 15 et 40, notamment un composé de formule (I) pour laquelle x représente un nombre entier ou décimal compris entre 40 et 60 et y+z représente un nombre entier ou décimal compris entre 20 et 30, par exemple un composé de formule (I) pour laquelle x représente 50 et y représente 25.

De manière également plus préférée, le monomère (b) est un composé de formule (I) pour laquelle x est strictement supérieur à y+z.

Selon l'invention, un composé (b) préféré est un composé choisi parmi les composés (b1), (b3), (b15), (b19) et (b21).

La composition aqueuse selon l'invention comprend au moins un copolymère obtenu par au moins une réaction de polymérisation radicalaire dans l'eau d'au moins un monomère (a) et d'au moins un monomère (b) de formule (I). La réaction de polymérisation peut également mettre en œuvre un ou plusieurs autre(s) monomère(s). La réaction de polymérisation met alors également en œuvre au moins un autre monomère (c) choisi parmi :
- un autre monomère anionique, de préférence choisi parmi acide acrylique, acide méthacrylique, acide itaconique, acide maléique, leurs sels et leurs mélanges,
- un monomère non ionique comprenant au moins une insaturation oléfinique polymérisable, de préférence au moins une insaturation éthylénique polymérisable et notamment une fonction vinylique polymérisable, plus préférentiellement un monomère non ionique choisi parmi les esters d'un acide comprenant au moins une fonction acide monocarboxylique, en particulier un ester d'un acide choisi parmi acide acrylique, acide méthacrylique, et leurs mélanges, par exemple hydroxyéthylacrylate, hydroxypropylacrylate, hydroxyéthylméthacrylate, hydroxypropylméthacrylate, styrène, vinylcaprolactam, acrylate d'alkyle, en particulier acrylate de C₁-C₁₀-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de Ci-Cio-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (III) :

   Q¹-(L¹)ₘ-(L²)ₙ-Q² (III)

   dans laquelle :
   - Q¹ représente un groupement acrylate polymérisable ou un groupement méthacrylate polymérisable,
   - Q² représente un groupement H ou un groupement CH₃,
   - L¹ et L², identiques ou différents, représentent indépendamment un groupement éthylenoxy ou un groupement propylenoxy et
   - m et n, identiques ou différents et dont au moins un est différent de 0, représentent un nombre inférieur ou égal à 150 et leur somme m+n est inférieure à 150 et
- acide 2-acrylamido-2-méthylpropane sulfonique, un sel d'acide 2-acrylamido-2-méthylpropane sulfonique, l'acide 2-(méthacryloyloxy)éthanesulfonique, un sel d'acide 2-(méthacryloyloxy)éthanesulfonique, méthallyl sulfonate de sodium, styrène sulfonate et leurs mélanges.

De manière avantageuse, la composition aqueuse selon l'invention comprend au moins un copolymère obtenu par au moins une réaction de polymérisation radicalaire dans l'eau qui est réalisée en l'absence d'acide maléique ou en l'absence d'anhydride maléique. L'invention fournit une composition aqueuse comprenant au moins un copolymère obtenu par au moins une réaction de polymérisation radicalaire dans l'eau d'au moins un monomère anionique (a) comprenant au moins une insaturation oléfinique polymérisable et au moins une fonction acide carboxylique ou d'un de ses sels et d'au moins un monomère (b) de formule (I). L'invention concerne également un tel copolymère en tant que tel, notamment un tel copolymère obtenu à partir d'une composition aqueuse selon l'invention puis séparation du copolymère selon l'invention, notamment séparation de l'eau de la composition aqueuse selon l'invention.

L'invention fournit donc un copolymère dont l'indice de polymolécularité I_{P} est inférieur à 3, obtenu par au moins une réaction de polymérisation radicalaire dans l'eau et à une température allant de 10 à 90°C :
(a) d'au moins un monomère anionique comprenant au moins une insaturation oléfinique polymérisable et au moins une fonction acide carboxylique et
(b) d'au moins un monomère de formule (I) : 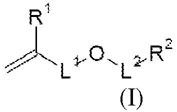 dans laquelle :
   - R¹ et R², identiques ou différents, représentent indépendamment H ou CH₃,
   - L¹ représente indépendamment un groupement choisi parmi CH₂, CH₂-CH₂ et O-CH₂-CH₂-CH₂-CH₂,
   - L² représente indépendamment un groupement choisi parmi (CH₂-CH₂O)ₓ, (CH₂CH(CH₃)O)_{y}, (CH(CH₃)CH₂O)_{z} et leurs combinaisons et
   - x, y et z, identiques ou différents, représentent indépendamment un nombre entier ou décimal compris entre 0 et 150, de préférence x est strictement supérieur à y+z et la somme x+y+z est comprise entre 10 et 150,
en présence :
(i) de 0,05 à 5 % en poids, par rapport à la quantité de monomères, d'au moins un composé de formule (II) : 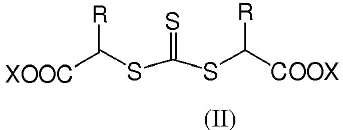 dans laquelle :
   - x représente indépendamment H, Na ou K et
   - R représente indépendamment un groupement Ci-Cs-alkyl et
(ii) d'au moins un composé générateur de radicaux choisi parmi peroxyde d'hydrogène, persulfate d'ammonium, persulfate de métal alcalin, et leurs mélanges ou associations avec bisulfite d'ammonium, avec un bisulfite de métal alcalin ou avec un ion choisi parmi Fe^{II}, Fe^{III}, Cu^{I}, Cu^{II}.

De manière préférée, le copolymère selon l'invention comprend :
- de 1 à 25 % en poids de monomère (a) et
- de 75 à 99 % en poids de monomère (b).

De manière également préférée, le copolymère selon l'invention comprend :
- de 2 à 25 % en poids de monomère (a) et
- de 75 à 98 % en poids de monomère (b).

De manière également préférée, le copolymère selon l'invention comprend :
- de 3 à 15 % en poids de monomère (a) et
- de 85 à 97 % en poids de monomère (b).

De manière également préférée, le copolymère selon l'invention comprend :
- de 3 à 10 % en poids de monomère (a) et
- de 90 à 97 % en poids de monomère (b).

De manière également préférée, le copolymère selon l'invention comprend :
- de 5 à 10 % en poids de monomère (a) et
- de 90 à 95 % en poids de monomère (b).

Le copolymère selon l'invention peut également être caractérisé par sa masse moléculaire en poids (M_{W}). De manière préférée, il possède une masse moléculaire en poids allant de 8 000 g/mol à 600 000 g/mol ou de 10 000 g/mol à 500 000 g/mol ou encore de 12 000 g/mol à 200 000 g/mol. De manière plus préférée, il possède une masse moléculaire en poids allant de 15 000 g/mol à 150 000 g/mol ou de 15 000 g/mol à 90 000 g/mol ou encore de 15 000 g/mol à 90 000 g/mol ou de 25 000 g/mol à 75 000 g/mol.

Selon l'invention, le poids moléculaire et l'indice de polymolécularité des copolymères est déterminé par Chromatographie d'Exclusion Stérique (CES) ou en anglais « Steric Exclusion Chromatography » (SEC). Cette technique met en œuvre un appareil de chromatographie liquide de marque Waters doté d'un détecteur. Ce détecteur est un détecteur de concentration réfractométrique de marque Waters. Cet appareillage de chromatographie liquide est doté d'une colonne d'exclusion stérique afin de séparer les différents poids moléculaires des copolymères étudiés. La phase liquide d'élution est une phase aqueuse ajustée à pH 9,00 au moyen de soude 1 N contenant 0,05 M de NaHCO₃, 0,1 M de NaNO₃, 0,02 M de triéthanolamine et 0,03 % de NaN₃.

Selon une première étape, on dilue à 0,9 % sec la solution de copolymère dans le solvant de solubilisation de la CES, qui correspond à la phase liquide d'élution de la CES à laquelle est ajoutée 0,04 % de diméthylformamide qui joue le rôle de marqueur de débit ou étalon interne. Puis, on filtre à 0,2 µm. 100 µL sont ensuite injectés dans l'appareil de chromatographie (éluant : une phase aqueuse ajustée à pH 9,00 par de la soude 1N contenant 0,05 M de NaHCO₃, 0,1 M de NaNO₃, 0,02 M de triéthanolamine et 0,03 % de NaN₃).

L'appareil de chromatographie liquide contient une pompe isocratique (Waters 515) dont le débit est réglé à 0,8 mL/min. L'appareil de chromatographie comprend également un four qui lui-même comprend en série le système de colonnes suivant : une précolonne de type Guard Column Ultrahydrogel Waters de 6 cm de longueur et 40 mm de diamètre intérieur et une colonne linéaire de type Ultrahydrogel Waters de 30 cm de longueur et 7,8 mm de diamètre intérieur. Le système de détection se compose d'un détecteur réfractométrique de type RI Waters 410. Le four est porté à la température de 60°C et le réfractomètre est porté à la température de 45°C.

Les masses moléculaires sont évaluées par détection de diffusion dynamique de la lumière au moyen d'un détecteur Viscotek Dual 270 grâce auquel la masse moléculaire est déterminée à partir du volume hydrodynamique du copolymère.

Les caractéristiques particulières, avantageuses ou préférées de la composition aqueuse selon l'invention définissent des copolymères selon l'invention qui sont également particuliers, avantageux ou préférés.

La composition aqueuse et le copolymère selon l'invention possèdent des propriétés particulièrement avantageuses dans de nombreux domaines techniques. Ainsi, selon le domaine technique dans lequel ces propriétés sont mises en œuvre, la composition aqueuse ou le copolymère selon l'invention peuvent prendre différentes formes. Ils peuvent notamment être mis en œuvre au sein de différentes formulations.

L'invention fournit donc une formulation (F1) comprenant :
- au moins une composition aqueuse selon l'invention,
- au moins un liant hydraulique, éventuellement
- de l'eau, éventuellement
- au moins un agrégat, éventuellement
- au moins un adjuvant.

L'invention fournit également une formulation (F2) comprenant :
- au moins un copolymère selon l'invention,
- au moins un liant hydraulique, éventuellement
- de l'eau, éventuellement
- au moins un agrégat, éventuellement
- au moins un adjuvant.

De manière préférée, les formulations (F1) et (F2) selon l'invention comprennent :
- de 0,01 à 5 % en poids sec de copolymère, respectivement sous la forme d'au moins une composition aqueuse selon l'invention ou d'au moins un copolymère selon l'invention en tant que tel et
- de 95 à 99,9 % en poids sec d'au moins un liant hydraulique.

De manière plus préférée, les formulations (F1) et (F2) selon l'invention comprennent :
- de 0,01 à 4 % en poids sec ou de 0,01 à 3 % en poids sec de copolymère, respectivement sous la forme d'au moins une composition aqueuse selon l'invention ou d'au moins un copolymère selon l'invention en tant que tel et
- de 96 à 99,9 % en poids sec ou de 97 à 99,9 % en poids sec d'au moins un liant hydraulique.

De manière également plus préférée, les formulations (F1) et (F2) selon l'invention comprennent :
- de 0,03 à 5 % en poids sec ou de 0,03 à 4 % en poids sec ou de 0,03 à 3 % en poids sec de copolymère, respectivement sous la forme d'au moins une composition aqueuse selon l'invention ou d'au moins un copolymère selon l'invention en tant que tel et
- de 95 à 99,7 % en poids sec ou de 96 à 99,7 % en poids sec de 97 à 99,7 % en poids sec d'au moins un liant hydraulique.

De manière également plus préférée, les formulations (F1) et (F2) selon l'invention comprennent :
- de 0,05 à 5 % en poids sec ou de 0,05 à 4 % en poids sec ou de 0,05 à 3 % en poids sec ou de 0,05 à 2 % en poids sec ou de 0,05 à 1,5 % en poids sec de copolymère, respectivement sous la forme d'au moins une composition aqueuse selon l'invention ou d'au moins un copolymère selon l'invention en tant que tel et
- de 95 à 99,5 % en poids sec ou de 96 à 99,5 % en poids sec ou de 97 à 99,5 % en poids sec ou de 98 à 99,5 % en poids sec ou de 98,5 à 99,5 % en poids sec d'au moins un liant hydraulique.

De manière également préférée, les formulations (F1) et (F2) selon l'invention comprennent de l'eau en une quantité en poids relative à la quantité en poids de liant hydraulique inférieure à 0,7, inférieure à 0,65 ou inférieure à 0,6, de préférence inférieure à 0,5 ou inférieure à 0,4 ou encore inférieure à 0,3 ou inférieure à 0,2. Des gammes préférées de quantité d'eau en poids par rapport à la quantité en poids de liant hydraulique dans les formulations (F1) et (F2) vont de 0,2 à 0,65 ou de 0,2 à 0,6 ou de 0,2 à 0,5 ou de 0,3 à 0,65 ou de 0,3 à 0,6 ou de 0,3 à 0,5.

Selon l'invention, le liant hydraulique ou hydrolithe peut être choisi parmi ciment, mortier, plâtre, coulis, béton.

Le ciment peut être choisi parmi ciment Portland, ciment Portland blanc, ciment artificiel, ciment de haut fourneau, ciment à haute résistance, ciment à l'alumine, ciment rapide, ciment au phosphate de magnésium, ciment à base de produits d'incinération, ciment de cendres volantes et leurs mélanges.

D'autres liants hydrauliques peuvent être choisis parmi liants hydrauliques latents, liants pouzzolaniques, cendres, scories, mâchefer.

Le plâtre peut être choisi parmi gypse, sulfate de calcium dihydraté, sulfate de calcium, hémihydrate de sulfate de calcium, anhydride de sulfate de calcium et leurs mélanges. L'agrégat peut être choisi parmi sable, agrégat grossier, gravier, pierre concassée, scories, agrégat recyclé.

Généralement, selon leur granulométrie, on classe les granulats en plusieurs catégories connues en tant que telles par l'homme du métier, par exemple selon la norme française XP P 18-540. Selon cette norme, définissant notamment les valeurs d et D, les familles de granulats comprennent :
- les fillers 0/D pour lesquels D < 2 mm avec au moins 70 % de passant à 0,063 mm,
- les sablons 0/D pour lesquels D ≤ 1 mm avec moins de 70 % de passant à 0,063 mm,
- les sables 0/D pour lesquels 1< D ≤ 6,3 mm,
- les graves 0/D pour lesquels D > 6,3 mm,
- les gravillons d/D pour lesquels d > 1 mm et D ≤ 125 mm et
- les ballasts d/D pour lesquels d > 25 mm et D ≤ 50 mm.

Des exemples de fillers sont des fumées de silice ou additions siliceuses, ou des additions calcaires comme du carbonate de calcium.

Selon l'invention, l'adjuvant des formulations (F1) ou (F2) peut être choisi parmi un agent anti-mousse, un agent plastifiant ou superplastifiant, un agent d'amélioration de l'ouvrabilité, un agent réducteur d'affaissement, un agent réducteur d'entraînement de l'air, un agent colorant, un pigment, un agent réducteur d'eau, un agent retardateur de prise, un agent de contrôle de l'hygroscopie, un agent anti-corrosion, un agent anti-retrait, un agent inhibiteur de réactions silico-alcalines, un agent hydrofuge, un agent moussant. Les propriétés particulières de la composition aqueuse selon l'invention ou du copolymère selon l'invention permettent de les utiliser dans de nombreux domaines techniques, notamment pour leurs propriétés de contrôle ou de régulation de la rhéologie.

Ainsi, l'invention fournit une méthode de modification de la rhéologie d'une formulation hydraulique comprenant l'addition d'au moins une composition aqueuse selon l'invention ou d'au moins un copolymère selon l'invention dans la formulation hydraulique comprenant de l'eau et un liant hydraulique.

Les propriétés de la composition selon l'invention et du copolymère sont particulièrement utiles dans le domaine des formulations hydrauliques.

L'invention fournit donc une méthode de contrôle de l'ouvrabilité d'une formulation hydraulique comprenant l'addition d'au moins une composition aqueuse selon l'invention ou d'au moins un copolymère selon l'invention dans une formulation hydraulique. De manière particulièrement avantageuse, l'invention fournit une méthode de contrôle de l'ouvrabilité pour laquelle l'ouvrabilité de la formulation hydraulique est maintenue constante pour une période d'au moins 1 h, de préférence d'au moins 2 h, plus préférentiellement d'au moins 3 h, encore plus préférentiellement d'au moins 3,5 h ou d'au moins 4 h.

L'invention fournit également une méthode de réduction du temps de prise d'une formulation hydraulique comprenant l'addition d'au moins une composition aqueuse selon l'invention ou d'au moins un copolymère selon l'invention dans une formulation hydraulique comprenant de l'eau et un liant hydraulique.

De manière préférée pour les méthodes de contrôle de l'ouvrabilité d'une formulation hydraulique ou de réduction du temps de prise d'une formulation hydraulique selon l'invention, la formulation hydraulique est choisie parmi une formulation hydraulique (F1) et une formulation hydraulique (F2).

Les caractéristiques particulières, avantageuses ou préférées des formulations hydrauliques (F1) et (F2) selon l'invention définissent les méthodes de contrôle de l'ouvrabilité d'une formulation hydraulique ou de réduction du temps de prise d'une formulation hydraulique selon l'invention qui sont également particulières, avantageuses ou préférées.

Les exemples qui suivent permettent d'illustrer les différents aspects de l'invention.

### EXEMPLES

### Exemple 1 : préparation de copolymères selon l'invention et d'un copolymère comparatif

### Exemple 1.1 : copolymère (P1) selon l'invention

Dans un réacteur agité, on introduit de l'eau (50 g), du sulfate de fer heptahydraté (0,11 g), un monomère de masse moléculaire (bl5) 2 400 g/mol en solution à 60 % massique dans l'eau (271,92 g), un comonomère (anhydride maléique) (9,71 g), une solution aqueuse de soude à 50 % massique (15,35 g) et du DPTTC en solution à 20 % massique dans l'eau (2,68 g). On chauffe le réacteur à 58 +/-3°C. On ajoute de l'eau oxygénée en solution aqueuse à 35 % massique (5,6 g).

Puis, durant 2 h, on injecte en parallèle dans le réacteur un mélange d'eau (30 g) et d'acide acrylique (22,65 g), un mélange d'eau (25 g), de monomère (bl5) de masse moléculaire 2 400 g/mol en solution à 60 % massique dans l'eau (32,7 g) et de DPTTC en solution à 20 % massique dans l'eau (10,0 g) ainsi qu'un mélange d'eau (55 g) et de bisulfite de sodium en solution aqueuse à 40 % massique (5,64 g) en 2hl5 pour ce dernier mélange. Le réacteur est maintenu en température à 58 +/-3°C durant 1 h.

Le produit est refroidi puis partiellement neutralisé par ajout d'une solution aqueuse de soude à 50 % massique (22,3 g). La solution polymérique aqueuse comprend moins de 900 ppm d'acide acrylique résiduel sec par rapport à la quantité totale de copolymère sec. On obtient un copolymère (P1) comprenant 10,5 % en poids d'acide acrylique, 85,0 % en poids de monomère (bl5) et 4,5 % en poids d'anhydride maléique. Sa masse moléculaire M_{W} est de 51 000 g/mol et son indice de polymolécularité I_{P} est de 1,9.

### Exemple 1.2 : copolymère (P2) selon l'invention

Dans un réacteur agité, on introduit de l'eau (50 g), du sulfate de fer heptahydraté (0,11 g), un monomère de masse moléculaire (bl5) 2 400 g/mol en solution à 60 % massique dans l'eau (271,92 g) et du DPTTC en solution à 20 % massique dans l'eau (2,54 g). On chauffe le réacteur à 35 +/-2°C. On ajoute de l'eau oxygénée en solution aqueuse à 35 % massique (5,6 g).

Puis, durant lhl5, on injecte en parallèle dans le réacteur un mélange d'eau (30 g) et d'acide acrylique (32,36 g) et un mélange de monomère (bl5) de masse moléculaire 2 400 g/mol en solution à 60 % massique dans l'eau (32,7 g), d'eau (30 g) et de DPTTC en solution à 20 % massique dans l'eau (10,15 g) ainsi qu'un mélange d'eau (55 g) et de bisulfite de sodium (5,64 g) en lh40 pour ce dernier mélange.

Le réacteur est maintenu en température à 35 +/-2°C durant lh30.

Le produit est refroidi puis partiellement neutralisé par ajout d'une solution aqueuse de soude à 50 % massique (36 g). La solution polymérique aqueuse comprend moins de 1 430 ppm d'acide acrylique résiduel sec par rapport à la quantité totale de copolymère sec.

On obtient un copolymère (P2) comprenant 14,5 % en poids d'acide acrylique et 85,5 % en poids de monomère (b15). Sa masse moléculaire Mw est de 129 800 g/mol et son indice de polymolécularité I_{P} est de 2,0.

### Exemple 1.3 : copolymère (P3) selon l'invention

Dans un réacteur agité, on introduit de l'eau (50 g) du sulfate de fer heptahydraté (0,11 g), un monomère (bl5) de masse moléculaire 2 400 g/mol en solution à 60 % massique dans l'eau (264,56 g) et du DPTTC en solution à 20 % massique dans l'eau (2,54 g). On chauffe le réacteur à 55 +/-2°C. On introduit de l'eau oxygénée en solution aqueuse à 35 % massique (5,6 g).

Puis, durant lhl5, on injecte en parallèle dans le réacteur un mélange d'eau (30 g), d'acide acrylique (32,49 g) et un mélange de monomère (bl5) de masse moléculaire 2 400 g/mol (32,7 g) en solution à 60 % massique dans l'eau, un mélange d'eau (16 g) et de DPTTC en solution à 20 % massique dans l'eau (10,15 g) ainsi qu'un mélange d'eau (55 g) et de persulfate d'ammonium (2,26 g) en lh40 pour ce dernier mélange.

Le réacteur est maintenu en température à 55 +/-2°C durant lh30.

Le produit est refroidi puis partiellement neutralisé par ajout d'une solution aqueuse de soude à 50 % massique (34,8 g). La solution polymérique aqueuse comprend moins de 130 ppm d'acide acrylique résiduel sec par rapport à la quantité totale de copolymère sec. On obtient un copolymère (P3) comprenant 15,4 % en poids d'acide acrylique et 84.6 % en poids de monomère (bl5). Sa masse moléculaire Mw est de 54 200 g/mol et son indice de polymolécularité I_{P} est de 1,7.

### Exemple 1.4 : copolymère (P4) selon l'invention

Dans un réacteur agité, on introduit de l'eau (240 g) et du DPTTC en solution à 20 % massique dans l'eau (3,0 g). On chauffe le réacteur à 65 +/-2°C.

Puis, durant 3 h, on injecte en parallèle dans le réacteur un mélange d'eau (10 g), d'acide acrylique (22,88 g) et de monomère (bl5) de masse moléculaire 2 400 g/mol en solution à 60 % massique dans l'eau (782,52 g), un mélange d'eau (40 g) et du DPTTC en solution à 20 % massique dans l'eau (12,0 g) et un mélange d'eau (65 g) et de persulfate d'ammonium (6,09 g).

Le réacteur est maintenu en température à 65 +/-2°C durant 1h.

Le produit est refroidi puis partiellement neutralisé par ajout d'une solution aqueuse de soude à 50 % massique (1,3 g). La solution polymérique aqueuse comprend moins de 40 ppm d'acide acrylique résiduel sec par rapport à la quantité totale de copolymère sec. On obtient un copolymère (P4) comprenant 4,6 % en poids d'acide acrylique, 95,4 % en poids de monomère (b15). Sa masse moléculaire Mw est de 55 100 g/mol et son indice de polymolécularité I_{P} est de 1,4.

### Exemple 1.5 : copolymère (P5) selon l'invention

Dans un réacteur agité, on introduit de l'eau (10 g), du sulfate de fer heptahydraté (0,11 g), un monomère (b3) de formule (I) dans laquelle L² représente une combinaison (CH₂-CH₂O)ₓ, (CH₂CH(CH₃)O)_{y} et (CH(CH₃)CH₂O)_{z}, x représente 42 et y+z représente 15,5, de masse moléculaire 3 000 g/mol en solution à 60 % massique dans l'eau (318 g) et du DPTTC en solution à 20 % massique dans l'eau (2,03 g). On chauffe le réacteur à 58 +/-3°C.

On ajoute de l'eau oxygénée en solution aqueuse à 35 % massique (4,48 g).

Puis, durant 2 h, on injecte en parallèle dans le réacteur un mélange d'eau (50 g) et d'acide acrylique (20.14 g), un mélange d'une solution à 20 % de DPTTC (8,12 g) et d'eau (40 g) et un mélange d'eau (55 g) et de bisulfite de sodium en solution aqueuse à 40 % massique (4,51 g), en 2hl5 pour ce dernier mélange.

Le réacteur est maintenu par la suite en température à 58 +/-3°C durant 1 h.

Le produit est refroidi puis partiellement neutralisé par ajout d'une solution aqueuse de soude à 50 % massique jusqu'à pH 7,5. La solution polymérique aqueuse comprend moins de 1 500 ppm d'acide acrylique résiduel sec par rapport à la quantité totale de copolymère sec.

On obtient un copolymère (P5) de masse moléculaire en poids de 60 820 g/mol et un indice de polymolécularité I_{P} de 1,2.

### Exemple 1.6 : copolymère (P6) selon l'invention

Dans un réacteur agité, on introduit de l'eau (10 g), du sulfate de fer heptahydraté (0,11 g), un monomère (b3) de formule (I) dans laquelle L² représente une combinaison (CH₂-CH₂O)ₓ, (CH₂CH(CH₃)O)_{y} et (CH(CH₃)CH₂O)_{z}, x représente 52 et y+z représente 11, de masse moléculaire 3 000 g/mol en solution à 60 % massique dans l'eau (318 g) et du DPTTC en solution à 20 % massique dans l'eau (2,03 g).On chauffe le réacteur à 58 +/-3°C.

On ajoute de l'eau oxygénée en solution aqueuse à 35 % massique (4,48 g).

Puis, durant 2 h, on injecte en parallèle dans le réacteur un mélange d'eau (50 g) et d'acide acrylique (20,14 g), un mélange d'une solution à 20 % massique de DPTTC (8,12g) et d'eau (40g) et un mélange d'eau (50 g) et de bisulfite de sodium en solution aqueuse à 40 % massique (4,51 g), en 2hl5 pour ce dernier mélange

Le réacteur est maintenu par la suite en température à 58 +/-3°C durant 1 h.

Le produit est refroidi puis partiellement neutralisé par ajout d'une solution aqueuse de soude à 50 % massique jusqu'à pH 7,5. La solution polymérique aqueuse comprend moins de 910 ppm d'acide acrylique résiduel sec par rapport à la quantité totale de copolymère sec.

On obtient un copolymère (P6) de masse moléculaire en poids de 46 190 g/mol et un indice de polymolécularité I_{P} de 1,3.

### Exemple 1.7 : copolymère (P7) selon l'invention

Dans un réacteur agité, on introduit de l'eau (145 g), du sulfate de fer heptahydraté (0,11 g), un monomère (bl9) de masse moléculaire 2 400 g/mol (191 g) et du DPTTC en solution à 20 % massique dans l'eau (2,54 g). On chauffe le réacteur à 58 +/-3°C.

On ajoute de l'eau oxygénée en solution aqueuse à 35 % massique (5,6 g).

Puis, durant 2 h, on injecte en parallèle dans le réacteur un mélange d'eau (30 g) et d'acide acrylique (20,14 g), un mélange d'une solution à 20 % massique de DPTTC (10,2 g) et d'eau (55 g) et un mélange d'eau (55 g) et de persulfate d'ammonium (2,6 g)

Le réacteur est maintenu par la suite en température à 58 +/-3°C durant 1 h.

Le produit est refroidi puis partiellement neutralisé par ajout d'une solution aqueuse de soude à 50 % massique jusqu'à pH 7,3. La solution polymérique aqueuse comprend moins de 25 ppm d'acide acrylique résiduel sec par rapport à la quantité totale de copolymère sec.

On obtient un copolymère (P7) de masse moléculaire en poids de 62 700 g/mol et un indice de polymolécularité I_{P} de 2,2.

### Exemple 1.8 : copolymère (P8) selon l'invention

Dans un réacteur agité, on introduit de l'eau (10 g), du sulfate de fer heptahydraté (0,11 g), un monomère (b3) de formule (I) dans laquelle R¹ représente CH₃, R² représente H, L¹ représente CH₂, L² représente une combinaison (CH₂-CH₂O)ₓ, (CH₂CH(CH₃)O)_{y} et (CH(CH₃)CH₂O)_{z} x représente 42 et y+z représente 15,5, de masse moléculaire 3 000 g/mol en solution à 60 % massique dans l'eau (318 g) et du DPTTC en solution à 20 % massique dans l'eau (2,54 g). On chauffe le réacteur à 65 +/-3°C.

On ajoute de l'eau oxygénée en solution aqueuse à 35 % massique (5,6 g).

Puis, durant 2 h, on injecte en parallèle dans le réacteur un mélange d'eau (50 g) et d'acide acrylique (20,14 g), un mélange d'une solution à 20 % massique de DPTTC (10,15g) et d'eau (40 g) et un mélange d'eau (55 g) et de persulfate d'ammonium (2,26g).

Le réacteur est maintenu à une température de 65+/-1°C durant 1 h.

Le produit est refroidi puis partiellement neutralisé par ajout d'une solution aqueuse de soude à 50 % massique jusqu'à pH 7,2. La solution polymérique aqueuse comprend moins de 810 ppm d'acide acrylique résiduel sec par rapport à la quantité totale de copolymère sec.

On obtient un copolymère (P8) de masse moléculaire en poids de 51 600 g/mol et un indice de polymolécularité I_{P} de 1,3.

### Exemple 1.9 : copolymère (P9) selon l'invention

Dans un réacteur agité, on introduit de l'eau (160 g), du sulfate de fer heptahydraté (0,11 g), un monomère (b19) de masse moléculaire 2 400 g/mol (194,6 g) et du DPTTC en solution à 20 % massique dans l'eau (2,03 g). On chauffe le réacteur à 65 +/-1°C.

On ajoute de l'eau oxygénée en solution aqueuse à 35 % massique (4,48 g).

Puis, durant 2 h, on injecte en parallèle dans le réacteur un mélange d'eau (30 g) et d'acide acrylique (20,55 g), un mélange d'une solution à 20 % massique de DPTTC (8,12 g) et d'eau (50 g) et un mélange d'eau (55 g) et d'une solution à 40 % massique de bisulfite de sodium.

Le réacteur est maintenu à une température de 65 +/-1°C durant 1 h.

Le produit est refroidi puis partiellement neutralisé par ajout d'une solution aqueuse de soude à 50 % massique jusqu'à pH 7,2. La solution polymérique aqueuse comprend moins de 43 ppm d'acide acrylique résiduel sec par rapport à la quantité totale de copolymère sec. On obtient un copolymère (P9) de masse moléculaire en poids de 68 100 g/mole et un indice de polymolécularité I_{P} de 2,3.

### Exemple 1.10 : copolymère (P10) selon l'invention

Dans un réacteur agité, on introduit du sulfate de fer heptahydraté (0,11 g), un monomère (b3) de formule (I) dans laquelle R¹ représente CH₃, R² représente H, L¹ représente CH₂, L² représente une combinaison (CH₂-CH₂O)ₓ, (CH₂CH(CH₃)O)_{y} et (CH(CH₃)CH₂O)_{z}, x représente 52 et y+z représente 11, de 3 000 g/mol en solution à 60 % massique dans l'eau (318 g) et du DPTTC en solution à 20 % massique dans l'eau (2,54 g). On chauffe le réacteur à 65 +/-1°C.

On ajoute de l'eau oxygénée en solution aqueuse à 35 % massique (5,6 g).

Puis, durant 2 h, on injecte en parallèle dans le réacteur un mélange d'eau (50 g) et d'acide acrylique (20,14 g), un mélange d'une solution à 20 % massique de DPTTC (10v15g) et d'eau (40 g) et un mélange d'eau (50 g) et de persulfate d'ammonium (2,26g).

Le réacteur est maintenu par la suite en température à 65 +/-1°C durant 1 h.

Le produit est refroidi puis partiellement neutralisé par ajout d'une solution aqueuse de soude à 50 % massique jusqu'à pH 7.5. La solution polymérique aqueuse comprend moins de 25 ppm d'acide acrylique résiduel sec par rapport à la quantité totale de copolymère sec.

On obtient un copolymère (P10) de masse moléculaire en poids de 53 390 g/mole et un indice de polydispersité de 2,1.

### Exemple 1.11 : copolymère (P11) selon l'invention

Dans un réacteur agité, on introduit du sulfate de fer heptahydraté (0,11 g), un monomère (b3) de formule (I) dans laquelle R¹ représente CH₃, R² représente H, L¹ représente CH₂, L² représente une combinaison (CH₂-CH₂O)ₓ, (CH₂CH(CH₃)O)_{y} et (CH(CH₃)CH₂O)_{z}, x représente 52 et y+z représente 11, de masse moléculaire 3 000 g/mol en solution à 60 % massique dans l'eau (318 g) et du DPTTC en solution à 20 % massique dans l'eau (2,54 g). On chauffe le réacteur à 65 +/-1°C.

On ajoute de l'eau oxygénée en solution aqueuse à 35 % massique (5,6 g).

Puis, durant 1 h, on injecte en parallèle dans le réacteur un mélange d'eau (50 g) et d'acide acrylique (20.14 g), un mélange d'une solution à 20 % massique de DPTTC (1015g) et d'eau (40 g) et un mélange d'eau (50 g) et de persulfate d'ammonium (2,26g).

Le réacteur est maintenu à 65 +/-1°C durant 1 h.

Le produit est refroidi puis partiellement neutralisé par ajout d'une solution aqueuse de soude à 50 % massique jusqu'à pH 7. La solution polymérique aqueuse comprend moins de 10 ppm d'acide acrylique résiduel sec par rapport à la quantité totale de copolymère sec.

On obtient un copolymère (P11) de masse moléculaire en poids de 56 460 g/mole et un indice de polymolécularité I_{P} de 1,2.

### Exemple 1.12 : copolymère (P12) selon l'invention

Dans un réacteur agité, on introduit du sulfate de fer heptahydraté (0,088 g), un monomère (bl5) de masse moléculaire 2 400 g/mol en solution à 60 % massique dans l'eau (362 g), du DPTTC en solution à 20 % massique dans l'eau (2,54 g) et 50g d'eau. On chauffe le réacteur à 65 +/-1°C.

On ajoute de l'eau oxygénée en solution aqueuse à 35 % massique (5,6 g).

Puis, durant 1 h, on injecte en parallèle dans le réacteur un mélange d'eau (40 g), d'acide acrylique (31,17 g) et d'acide méthacrylique (7,8g), un mélange d'une solution à 20 % de DPTTC (8,12g) et d'eau (50 g) et un mélange d'eau (50 g) et d'une solution à 40% de metabisulfite de sodium (4,51g)

Le réacteur est maintenu par la suite en température à 65 +/-1°C durant 1 h.

Le produit est refroidi puis partiellement neutralisé par ajout d'une solution aqueuse de soude à 50 % massique jusqu'à pH 7,1. La solution polymérique aqueuse comprend moins de 667 ppm d'acide acrylique résiduel sec par rapport à la quantité totale de copolymère sec et 5 ppm d'acide méthacrylique résiduel par rapport à la quantité totale de polymère sec.

On obtient un copolymère (P12) de masse moléculaire en poids de 81 090 g/mole et un indice de polymolécularité I_{P} de 1,2.

### Exemple 1.13 : copolymère comparatif

Dans un réacteur agité, on introduit de l'eau (50 g), un monomère (bl5) de masse moléculaire 2 400 g/mol en solution à 60 % massique dans l'eau (432,53 g) et du DMDO (1,8-dimercapto-3,6-dioxaoctane) (0,62 g). On chauffe le réacteur à 37+/- 2°C. On ajoute de l'eau oxygénée en solution aqueuse à 35 % massique (5,6 g).

Puis, durant lhl5, on injecte en parallèle dans le réacteur un mélange d'eau (30 g) et d'acide acrylique (29,47 g), un mélange d'eau (25 g), de monomère (bl5) de masse moléculaire 2 400 g/mol en solution à 60 % massique dans l'eau (32,7 g) et de DMDO (4,93 g) ainsi qu'un mélange d'eau (55 g) et de bisulfite de sodium en solution à 40 % massique dans l'eau (5,64 g), en lh40 pour ce dernier mélange.

Le réacteur est maintenu en température à 37 +/-2°C durant lh30.

Le produit est refroidi puis partiellement neutralisé par ajout d'une solution aqueuse de soude à 50 % massique (32,5 g). La solution polymérique aqueuse comprend plus de 12 000 ppm d'acide acrylique résiduel sec par rapport à la quantité totale de copolymère sec. Par ailleurs, près de 60 % en poids de monomère (b15) n'a pas réagi.

### Exemple 1.14 : copolymère comparatif

Dans un réacteur agité, on introduit de l'eau (50 g), du sulfate de fer heptahydraté (0,11 g), un monomère (bl5) de masse moléculaire 2 400 g/mol en solution à 60 % massique dans l'eau (264,56 g) et de DMDO (1,8-dimercapto-3,6-dioxaoctane) (0,62 g). On chauffe le réacteur à 37+/- 2°C. On ajoute de l'eau oxygénée en solution aqueuse à 35 % massique (5,6 g).

Puis, durant lhl5, on injecte en parallèle dans le réacteur un mélange d'eau (30 g) et d'acide acrylique (32,49 g), un mélange d'eau (25 g), de monomère (bl5) de masse moléculaire 2 400 g/mol en solution à 60 % massique dans l'eau (32,7 g) et de DMDO (4,93 g) ainsi qu'un mélange d'eau (55 g) et de bisulfite de sodium en solution à 40 % massique dans l'eau (5,64 g), en lh40 pour ce dernier mélange.

Le réacteur est maintenu en température à 37 +/-2°C durant lh30.

Le produit est refroidi puis partiellement neutralisé par ajout d'une solution aqueuse de soude à 50 % massique (36,6 g). La solution polymérique aqueuse comprend plus de 12 000 ppm d'acide acrylique résiduel sec par rapport à la quantité totale de copolymère sec. Par ailleurs, près de 20 % en poids de monomère (b15) n'a pas réagi.

### Exemple 2 : évaluation du pouvoir réducteur d'eau dans un mortier

On prépare des formulations de mortier dont la composition est présentée dans le tableau 1 selon la procédure :
- incorporation de l'adjuvant et de l'eau dans le bol d'un malaxeur automatique Perrier pour ciments et mortiers normalisés,
- incorporation de l'ensemble des fines (ciment et/ou liants hydrauliques),
- malaxage à vitesse lente de 140 tr/min,
- incorporation du sable après 30 s,
- malaxage à vitesse lente de 140 tr/min durant 60 s,
- arrêt durant 30 s et nettoyage des parois du bol,
- malaxage à vitesse lente de 140 tr/min durant 90 s.

De manière similaire, on prépare une formulation (FC) comparative de mortier ne comprenant pas de copolymère.

Le pouvoir réducteur d'eau des copolymères selon l'invention est évalué à partir de formulations de mortier.

La maniabilité T0 des mortiers formulés avec les copolymères selon l'invention a été évaluée par mesure du diamètre d'étalement (*slump flow* en anglais) selon la norme EN 12350-2 adaptée au mortier (mini-cône d'Abrams).

Pour effectuer l'étalement, on soulève le cône rempli de mortier formulé perpendiculairement à une plaque horizontale tout en effectuant un quart de tour. L'étalement est mesuré après 5 minutes selon deux diamètres à 90° avec un réglet. Le résultat de la mesure d'étalement est la moyenne des 2 valeurs à +/- 1 mm. Les essais sont réalisés à 20°C. Le dosage en adjuvant est déterminé de manière à atteindre un étalement cible de 220 mm +/- 5 mm. Le dosage est exprimé en % en poids sec par rapport au poids du liant hydraulique ou du mélange de liants hydrauliques. Les résultats sont présentés dans le tableau 1.

**Tableau 1**

| Formulation | FC | Selon l'invention | |
|---|---|---|---|
| | | F1-1 | F1-3 |
| Sable AFNOR (g) | 1 350 | 1 350 | 1 350 |
| Ciment CEM I 52.5N VICAT (g) | 450 | 450 | 450 |
| Copolymère (% en poids sec/poids sec de ciment) | / | P2 (0,09) | P3 (0,10) |
| Agent anti-mousse (%/adjuvant) | / | 0,5 | 0,5 |
| Eau (g) | 266 | 200 | 200 |
| Rapport en poids eau/ciment | 0,59 | 0,44 | 0,44 |
| Maniabilité T0 | 220 | 220 | 220 |
| Réduction d'eau (%) | 0 | 25 | 25 |

La mise en œuvre des copolymères selon l'invention permet de réduire la quantité d'eau de 25 % dans la formulation hydraulique, tout en maintenant une fluidité initiale (maniabilité) similaire à celle de la formulation comparative ne comprenant pas de copolymère.

Les copolymères selon l'invention peuvent donc être qualifiés d'agents haut réducteurs d'eau selon la norme ADJUVANT NF EN 934-2. En effet, ils permettent une réduction d'eau pour le mortier adjuvanté d'au moins 12 % par rapport au mortier témoin.

### Exemple 3 : évaluation du pouvoir réducteur d'eau dans un béton

On prépare des formulations de béton (300 kg/m3) selon la norme NF EN 480-1 par mélange sous agitation, de sable normalisé (0/4), de ciment (CEM I 52.5N Vicat), de graviers 4/11 et 11/22, d'eau et d'un agent anti-mousse ainsi que de copolymère selon l'invention. De manière similaire, on prépare une formulation de béton comparative ne comprenant pas de copolymère. Les proportions de chacun des constituants des formulations hydrauliques préparées sont présentées dans le tableau 2.

Le rapport en poids eau/ciment est ajusté de manière à conserver une maniabilité initiale similaire à celle de la formulation de béton comparative.

Les formulations hydrauliques présentent un aspect homogène, sans ségrégation des constituants.

La fluidité initiale (maniabilité à T0) et la réduction d'eau des formulations hydrauliques préparées sont présentées dans le tableau 2.

La fluidité initiale (ou maniabilité à T0) est réalisée à température ambiante, au moyen d'un cône sans fond, de forme tronconique, en acier galvanisé, appelé cône d'Abrams, selon la norme EN 12350-2. Ce cône présente les caractéristiques suivantes :
- diamètre supérieur : 100 ± 2 mm,
- diamètre inférieur : 200 ± 2 mm et
- hauteur : 300 ± 2 mm.

Le cône est posé sur une plaque horizontale humidifiée puis rempli avec une quantité déterminée de chacune des formulations. Le remplissage dure 2 minutes. Le contenu du cône est tassé au moyen d'une tige métallique.

Dès la fin du remplissage, le cône est soulevé verticalement, ce qui conduit à l'affaissement de son contenu sur la plaque. Les formulations de béton peuvent être classées en fonction de leur maniabilité suivant la norme EN 206-1.

La mesure de la réduction d'eau est effectuée selon la norme ADJUVANT NF EN 934-2. Les résultats obtenus pour les différentes formulations hydrauliques sont présentés dans le tableau 2.

**Tableau 2**

| Formulation | FC | Selon l'invention | |
|---|---|---|---|
| | | F1-4 | F1-1 |
| Sable (kg) | 32,6 | 32,6 | 32,6 |
| Gravier 4/11 (kg) | 12,4 | 12,4 | 12,4 |
| Gravier 11/22 (kg) | 29,1 | 29,1 | 29,1 |
| Ciment | 12 | 12 | 12 |
| Copolymère (% en poids sec/poids sec de ciment) | / | P1 (0,21) | P2 (0,23) |
| Agent anti-mousse (%/adjuvant) | / | 0,5 | 0,5 |
| Eau (g) | 7 706 | 5 778 | 5 778 |
| Rapport en poids eau/ciment | 0,64 | 0,48 | 0,48 |
| Maniabilité T0 | 220 | 220 | 225 |
| Réduction d'eau (%) | 0 | 25 | 25 |

La mise en œuvre des copolymères selon l'invention permet de réduire la quantité d'eau de 25 % dans la formulation hydraulique, tout en maintenant une fluidité initiale (maniabilité) similaire à celle de la formulation hydraulique comparative.

Les copolymères selon l'invention peuvent donc être qualifiés d'agents haut réducteurs d'eau selon la norme ADJUVANT NF EN 934-2. En effet, ils permettent une réduction d'eau pour le béton adjuvanté d'au moins 12 % par rapport au béton témoin.

## Revendications

1. Composition aqueuse comprenant au moins un copolymère dont l'indice de polymolécularité I_{P} est inférieur à 3, déterminé par Chromatographie d'Exclusion Stérique (CES), obtenu par au moins une réaction de polymérisation radicalaire dans l'eau et à une température allant de 10 à 90°C :
(a) d'au moins un monomère anionique comprenant au moins une insaturation oléfinique polymérisable et au moins une fonction acide carboxylique et
(b) d'au moins un monomère de formule (I) : 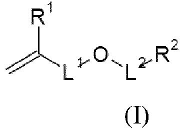 dans laquelle :
- R¹ et R², identiques ou différents, représentent indépendamment H ou CH₃,
- L¹ représente indépendamment un groupement choisi parmi CH₂, CH₂-CH₂ et O-CH₂-CH₂-CH₂-CH₂,
- L² représente indépendamment un groupement choisi parmi (CH₂-CH₂O)ₓ, (CH₂CH(CH₃)O)_{y}, (CH(CH₃)CH₂O)_{z} et leurs combinaisons et
- x, y et z, identiques ou différents, représentent indépendamment un nombre entier ou décimal compris entre 0 et 150 et la somme x+y+z est comprise entre 10 et 150,
en présence :
(i) de 0,05 à 5 % en poids, par rapport à la quantité de monomères, d'au moins un composé de formule (II) : 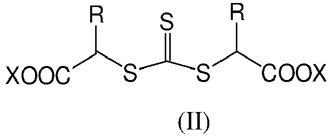 dans laquelle :
- X représente indépendamment H, Na ou K et
- R représente indépendamment un groupement C₁-C₅-alkyl et
(ii) d'au moins un composé générateur de radicaux choisi parmi peroxyde d'hydrogène, persulfate d'ammonium, un persulfate de métal alcalin, et leurs mélanges ou associations avec bisulfite d'ammonium, avec un bisulfite de métal alcalin ou avec un ion choisi parmi Fe^{II}, Fe^{III}, Cu^{I}, Cu^{II}.

2. Composition selon la revendication 1 ne comprenant pas d'homopolymère du monomère (a).

3. Composition selon l'une des revendications 1 et 2 pour laquelle la réaction de polymérisation met en œuvre :
- de 1 à 25 % en poids de monomère (a) et
- de 75 à 99 % en poids de monomère (b).

4. Composition selon l'une des revendications 1 à 3 pour laquelle le copolymère comprend :
- de 1 à 25 % en poids de monomère (a) et
- de 75 à 99 % en poids de monomère (b) ou
comprenant moins de 2 000 ppm en poids ou moins de 1 500 ppm en poids, de préférence moins de 1 000 ppm en poids ou moins de 500 ppm en poids, en particulier moins de 200 ppm en poids ou moins de 100 ppm en poids de monomère résiduel (a) par rapport à la quantité en poids sec de copolymère.

5. Composition selon l'une des revendications 1 à 4 pour laquelle le monomère (a) mis en œuvre est choisi parmi acide acrylique, acide méthacrylique, acide itaconique, acide maléique, un sel d'acide acrylique, un sel d'acide méthacrylique, un sel d'acide itaconique, un sel d'acide maléique et leurs mélanges.

6. Composition selon l'une des revendications 1 à 5 pour laquelle
- x est strictement supérieur à y+z ou pour laquelle
- la réaction de polymérisation radicalaire dans l'eau est mise en œuvre à une température allant de 30 à 85°C, de préférence de 40 à 75°C ou de 50 à 70°C ou à une température allant de 35 à 85°C, de 40 à 85°C, de 45 à 85°C, de 50 à 85°C, de 60 à 85°C ou de 35 à 70°C, de 40 à 70°C, de 45 à 70°C, de 50 à 70°C, de 60 à 70°.

7. Composition selon l'une des revendications 1 à 6 pour laquelle la réaction de polymérisation met également en œuvre un autre monomère anionique, de préférence un monomère choisi parmi acide acrylique, acide méthacrylique, acide itaconique, acide maléique et leurs mélanges ou pour laquelle la réaction de polymérisation met également en œuvre au moins un autre monomère (c) choisi parmi :
• un autre monomère anionique, de préférence choisi parmi acide acrylique, acide méthacrylique, acide itaconique, leurs sels et leurs mélanges,
• un monomère non ionique comprenant au moins une insaturation oléfinique polymérisable, de préférence au moins une insaturation éthylénique polymérisable et notamment une fonction vinylique polymérisable, plus préférentiellement un monomère non ionique choisi parmi les esters d'un acide comprenant au moins une fonction acide monocarboxylique, en particulier un ester d'un acide choisi parmi acide acrylique, acide méthacrylique, et leurs mélanges, par exemple hydroxyéthylacrylate, hydroxypropylacrylate, hydroxyéthylméthacrylate, hydroxypropylméthacrylate, styrène, vinylcaprolactam, acrylate d'alkyle, en particulier acrylate de C₁-C₁₀-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de C₁-C₁₀-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (III) :
Q¹-(L¹)ₘ-(L²)ₙ-Q² (III)
dans laquelle :
- Q¹ représente un groupement acrylate polymérisable ou un groupement méthacrylate polymérisable,
- Q² représente un groupement H ou un groupement CH₃,
- L¹ et L², identiques ou différents, représentent indépendamment un groupement éthylenoxy ou un groupement propylenoxy et
- m et n, identiques ou différents et dont au moins un est différent de 0, représentent un nombre inférieur ou égal à 150 et leur somme m+n est inférieure à 150 et
• acide 2-acrylamido-2-méthylpropane sulfonique, un sel d'acide 2-acrylamido-2-méthylpropane sulfonique, l'acide 2-(méthacryloyloxy)éthanesulfonique, un sel d'acide 2-(méthacryloyloxy)éthanesulfonique, méthallyl sulfonate de sodium, styrène sulfonate et leurs mélanges.

8. Copolymère dont l'indice de polymolécularité Ip est inférieur à 3, déterminé par Chromatographie d'Exclusion Stérique (CES), obtenu par au moins une réaction de polymérisation radicalaire dans l'eau et à une température allant de 10 à 90°C :
(a) d'au moins un monomère anionique comprenant au moins une insaturation oléfinique polymérisable et au moins une fonction acide carboxylique et
(b) d'au moins un monomère de formule (I) : 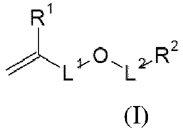 dans laquelle :
- R¹ et R², identiques ou différents, représentent indépendamment H ou CH₃,
- L¹ représente indépendamment un groupement choisi parmi CH₂, CH₂-CH₂ et O-CH₂-CH₂-CH₂-CH₂,
- L² représente indépendamment un groupement choisi parmi (CH₂-CH₂O)ₓ, (CH₂CH(CH₃)O)_{y}, (CH(CH₃)CH₂O)_{z} et leurs combinaisons et
- x, y et z, identiques ou différents, représentent indépendamment un nombre entier ou décimal compris entre 0 et 150, de préférence x est strictement supérieur à y+z et la somme x+y+z est comprise entre 10 et 150,
en présence :
(i) de 0,05 à 5 % en poids, par rapport à la quantité de monomères, d'au moins un composé de formule (II) : 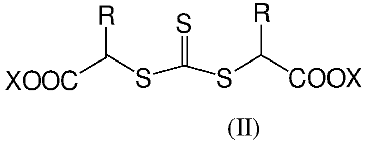 dans laquelle :
- x représente indépendamment H, Na ou K et
- R représente indépendamment un groupement C₁-C₅-alkyl et (ii) d'au moins un composé générateur de radicaux choisi parmi peroxyde d'hydrogène, persulfate d'ammonium, un persulfate de métal alcalin, et leurs mélanges ou associations avec bisulfite d'ammonium, avec un bisulfite de métal alcalin ou avec un ion choisi parmi Fe^{II}, Fe^{III}, Cu^{I}, Cu^{II}.

9. Copolymère selon la revendication 8 comprenant :
- de 1 à 25 % en poids de monomère (a) et
- de 75 à 99 % en poids de monomère (b).

10. Formulation comprenant :
- au moins une composition aqueuse selon l'une des revendications 1 à 7 ou au moins un copolymère selon l'une des revendications 8 et 9,
- au moins un liant hydraulique, éventuellement
- de l'eau, éventuellement
- au moins un agrégat, éventuellement
- au moins un adjuvant.

11. Formulation selon la revendication 10 comprenant :
- de 0,01 à 5 % en poids sec de copolymère, respectivement sous la forme d'au moins une composition aqueuse selon l'une des revendications 1 à 7 ou d'au moins un copolymère selon l'une des revendications 8 et 9 en tant que tel et
- de 95 à 99,9 % en poids sec d'au moins un liant hydraulique.

12. Formulation selon l'une des revendications 10 et 11 comprenant de l'eau en une quantité en poids relative à la quantité en poids de liant hydraulique inférieure à 0,7, inférieure à 0,65 ou inférieure à 0,6, de préférence inférieure à 0,5 ou inférieure à 0,4 ou encore inférieure à 0,3 ou inférieure à 0,2 ou encore allant de 0,2 à 0,65 ou de 0,2 à 0,6 ou de 0,2 à 0,5 ou de 0,3 à 0,65 ou de 0,3 à 0,6 ou de 0,3 à 0,5.

13. Méthode de modification de la rhéologie d'une formulation hydraulique comprenant l'addition d'au moins une composition aqueuse selon l'une des revendications 1 à 7 ou d'au moins un copolymère selon l'une des revendications 8 et 9 dans la formulation hydraulique.

14. Méthode de contrôle de l'ouvrabilité d'une formulation hydraulique comprenant l'addition d'au moins une composition aqueuse selon l'une des revendications 1 à 7 ou d'au moins un copolymère selon l'une des revendications 8 et 9 dans une formulation hydraulique, de préférence l'ouvrabilité de la formulation hydraulique est maintenue constante pour une période d'au moins 1h, de préférence d'au moins 2 h, plus préférentiellement d'au moins 3 h, encore plus préférentiellement d'au moins 3,5 h ou d'au moins 4 h.

15. Méthode de réduction du temps de prise d'une formulation hydraulique comprenant l'addition d'au moins une composition aqueuse selon l'une des revendications 1 à 7 ou d'au moins un copolymère selon l'une des revendications 8 et 9 dans une formulation hydraulique.

## Patentansprüche

1. Wässrige Zusammensetzung mit mindestens einem Copolymer mit einem Polymolekularitätsindex I_{P} von unter 3, ermittelt durch sterische Ausschlusschromatographie (SEC), das durch mindestens eine radikalische Polymerisationsreaktion in Wasser und bei einer Temperatur von 10 bis 90 °C erhalten wird, und zwar von:
(a) mindestens einem anionischen Monomer, das mindestens eine polymerisierbare olefinische Ungesättigtheit und mindestens eine Carbonsäurefunktion hat, und
(b) mindestens einem Monomer mit der Formel (I): 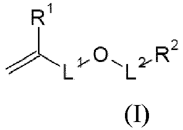 wobei:
- R¹ und R² gleich oder verschieden sein können und unabhängig H oder CH₃ darstellen,
- L¹ unabhängig eine Gruppe darstellt, die ausgewählt ist aus CH₂, CH₂-CH₂ und O-CH₂-CH₂-CH₂-CH₂,
- L² unabhängig eine Gruppe darstellt, die ausgewählt ist aus (CH₂-CH₂O)ₓ, (CH₂CH(CH₃)O)_{y}, (CH(CH₃)CH₂O)_{z} und deren Kombinationen, und
- x, y und z, die gleich oder verschieden sein können, unabhängig eine Ganzzahl oder Dezimalzahl zwischen 0 und 150 darstellen, wobei die Summe x+y+z zwischen 10 und 150 liegt,
in Gegenwart von:
(i) 0,05 bis 5 Gew.-%, bezogen auf die Menge an Monomeren, mindestens einer Verbindung mit der Formel (II): 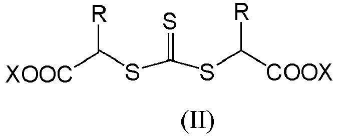 wobei:
- X unabhängig H, Na oder K darstellt, und
- R unabhängig eine C₁-C₅-Alkylgruppe darstellt, und (ii) mindestens einer radikalbildenden Verbindung, ausgewählt aus Wasserstoffperoxid, Ammoniumpersulfat, Alkalimetallpersulfat und deren Mischungen, oder Assoziationen mit Ammoniumbisulfit, einem Alkalimetallbisulfit oder einem Ion ausgewählt aus Fe^{II}, Fe^{III}, Cu^{I}, Cu^{II}.

2. Zusammensetzung nach Anspruch 1, die kein Homopolymer des Monomers (a) umfasst.

3. Zusammensetzung nach einem der Ansprüche 1 oder 2, wobei bei der Polymerisationsreaktion Folgendes umgesetzt wird:
- 1 bis 25 Gew.-% von Monomer (a) und
- 75 bis 99 Gew.-% von Monomer (b).

4. Zusammensetzung nach einem der Ansprüche 1 bis 3, wobei das Copolymer umfasst:
- 1 bis 25 Gew.-% von Monomer (a) und
- 75 bis 99 Gew.-% von Monomer (b), oder
weniger als 2.000 Gew.-ppm oder weniger als 1.500 Gew.-ppm, vorzugsweise weniger als 1.000 Gew.-ppm, oder weniger als 500 Gew.-ppm, insbesondere weniger als 200 Gew.- ppm oder weniger als 100 Gew.-ppm des restlichen Monomers (a), bezogen auf die Trockengewichtsmenge an Copolymer.

5. Zusammensetzung nach einem der Ansprüche 1 bis 4, wobei das verwendete Monomer (a) ausgewählt ist aus Acrylsäure, Methacrylsäure, Itaconsäure, Maleinsäure, Acrylsäuresalz, Methacrylsäuresalz, Itaconsäuresalz, Maleinsäuresalz und deren Mischungen.

6. Zusammensetzung nach einem der Ansprüche 1 bis 5, wobei:
- x strikt größer als y+z ist, oder bei der
- die radikalische Polymerisationsreaktion in Wasser umgesetzt wird bei einer Temperatur zwischen 30 à 85°C, vorzugsweise zwischen 40 und 75 °C oder zwischen 50 und 70 °C, oder bei einer einer Temperatur zwischen 35 und 85 °C, zwischen 40 und 85 °C, zwischen 45 und 85 °C, zwischen 50 und 85 °C, zwischen 60 und 85 °C oder zwischen 35 und 70 °C, zwischen 40 und 70 °C, zwischen 45 und 70 °C, zwischen 50 und 70 °C, zwischen 60 und 70 °C.

7. Zusammensetzung nach einem der Ansprüche 1 bis 6, wobei die Polymerisationsreaktion ebenfalls ein anderes anionisches Monomer umsetzt, vorzugsweise ein Monomer, ausgewählt aus Acrylsäure, Methacrylsäure, Itaconsäure, Maleinsäure und deren Mischungen, oder bei der die Polymerisationsreaktion ebenfalls mindestens ein anderes Monomer verwendet (c), das ausgewählt ist aus:
• einem weiteren anionischen Monomer, vorzugsweise ausgewählt aus Acrylsäure, Methacrylsäure, Itaconsäure, deren Salze und Mischungen,
• einem nicht-ionischen Monomer mit mindestens einer polymerisierbaren olefinischen Ungesättigtheit, vorzugsweise mindestens einer polymerisierbaren ethylenischen Ungesättigtheit und insbesondere einer polymerisierbaren funktionellen Vinylgruppe, noch mehr bevorzugt einem nicht-ionischen Monomer, ausgewählt aus den Estern einer Säure mit mindestens einer Monocarbonsäurefunktion, insbesondere einem Ester einer Säure, ausgewählt aus Acrylsäure, Methacrylsäure und deren Mischungen, beispielsweise Hydrocyethylacrylat, Hydroxypropylacrylat, Hydroxyethylmethacrylat, Hydroxypropylmethacrylat, Styrol, Vinylcaprolactam, Alkylacrylat, insbesondere C₁-C₁₀-Alkylacrylat, vorzugsweise C₁-C₄-Alkylacrylat, noch mehr bevorzugt Methylacrylat, Ethylacrylat, Propylacrylat, Isobutylacrylat, n-Butylacrylat, Alkylmethacrylat, insbesondere C₁-C₁₀-Alkylmethacrylat, vorzugsweise C₁-C₄-Alkylmethacrylat, noch mehr bevorzugt Methylmethacrylat, Ethylmethacrylat, Propylmethacrylat, Isobutylmethacrylat, n-Butylmethacrylat, Arylacrylat, vorzugsweise Phenylacrylat, Benzylacrylat, Phenoxyethylacrylat, Arylmethacrylat, vorzugsweise Phenylmethacrylat, Benzylmethacrylat, Phenoxyethylmethacrylat, einer Verbindung mit der Formel (III):
Q¹-(L¹)ₘ-(L²)ₙ-Q² (III)
wobei:
- Q¹ eine polymerisierbare Acrylatgruppe oder polymerisierbare Methacrylatgruppe ist,
- Q² eine H-Gruppe oder eine CH₃-Gruppe ist,
- L¹ und L², die gleich oder verschieden sein können, unabhängig voneinander eine Ethylenoxy-Gruppe oder eine Propylenoxy-Gruppe darstellen, und
- m und n, die gleich oder verschieden sein können und von denen mindestens eine Größe ungleich 0 ist, eine Zahl von kleiner oder gleich 150 darstellen, wobei deren Summe m+n unter 150 liegt, und
• 2-Acrylamido-2-methylpropansulfonsäure, einem Salz von 2-Acrylamido-2-methylpropansulfonsäure, 2-(Methacryloyloxy)ethansulfonsäure, einem Salz von 2-(Methacryloyloxy)ethansulfonsäure, Natriummethallylsulfonat, Styrolsulfonat und deren Mischungen.

8. Copolymer mit einem Polymolekularitätsindex I_{P} von unter 3, ermittelt durch sterische Ausschlusschromatographie (SEC), das durch mindestens eine radikalische Polymerisationsreaktion in Wasser und bei einer Temperatur von 10 bis 90 °C erhalten wird, und zwar von:
(a) mindestens einem anionischen Monomer, das mindestens eine polymerisierbare olefinische Ungesättigtheit und mindestens eine Carbonsäurefunktion hat, und
(b) mindestens einem Monomer mit der Formel (I): 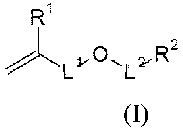 wobei:
- R¹ und R² gleich oder verschieden sein können und unabhängig H oder CH₃ darstellen,
- L¹ unabhängig eine Gruppe darstellt, die ausgewählt ist aus CH₂, CH₂-CH₂ und O-CH₂-CH₂-CH₂-CH₂,
- L² unabhängig eine Gruppe darstellt, die ausgewählt ist aus (CH₂-CH₂O)ₓ, (CH₂CH(CH₃)O)_{y}, (CH(CH₃)CH₂O)_{z} und deren Kombinationen, und
- x, y und z, die gleich oder verschieden sein können, unabhängig eine Ganzzahl oder Dezimalzahl zwischen 0 und 150 darstellen, wobei vorzugsweise x strikt größer als y+z ist und die Summe x+y+z zwischen 10 und 150 liegt,
in Gegenwart von:
(i) 0,05 bis 5 Gew.-%, bezogen auf die Menge an Monomeren, mindestens einer Verbindung mit der Formel (II): 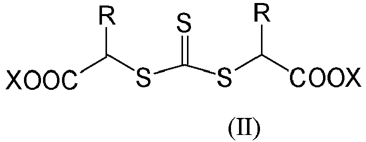 wobei:
- X unabhängig H, Na oder K darstellt, und
- R unabhängig eine C₁-C₅-Alkylgruppe darstellt, und
(ii) mindestens einer radikalbildenden Verbindung, ausgewählt aus Wasserstoffperoxid, Ammoniumpersulfat, Alkalimetallpersulfat und deren Mischungen, oder Assoziationen mit Ammoniumbisulfit, einem Alkalimetallbisulfit oder einem Ion ausgewählt aus Fe^{II}, Fe^{III}, Cu^{I}, Cu^{II}.

9. Copolymer nach Anspruch 8, mit:
- 1 bis 25 Gew.-% von Monomer (a) und
- 75 bis 99 Gew.-% von Monomer (b).

10. Formulierung, umfassend:
- mindestens eine wässrige Zusammensetzung nach einem der Ansprüche 1 bis 7 oder mindestens ein Copolymer nach einem der Ansprüche 8 oder 9,
- mindestens ein hydraulisches Bindemittel, eventuell
- Wasser, eventuell
- mindestens einen Zuschlagstoff, eventuell
- mindestens einen Hilfsstoff.

11. Formulierung nach Anspruch 10 mit:
- 0,01 bis 5 Trockengew.-% eines Copolymers, jeweils in Form mindestens einer wässrigen Zusammensetzung nach einem der Ansprüche 1 bis 7 oder mindestens eines Copolymers nach einem der Ansprüche 8 oder 9 als solches, und
- 95 bis 99,9 Trockengew.-% mindestens eines hydraulischen Bindemittels.

12. Formulierung nach einem der Ansprüche 10 oder 11 mit Wasser in einer Gewichtsmenge, bezogen auf die Gewichtsmenge des hydraulischen Bindemittels, von weniger als 0,7, weniger als 0,65 oder weniger als 0,6, vorzugsweise weniger als 0,5 oder weniger als 0,4, oder noch weniger als 0,3 oder weniger als 0,2, oder von 0,2 bis 0,65 oder von 0,2 bis 0,6 oder von 0,2 bis 0,5 oder von 0,3 bis 0,65 oder von 0,3 bis 0,6 oder von 0,3 bis 0,5.

13. Verfahren zur Rheologie-Modifikation einer hydraulischen Formulierung mit Zusatz mindestens einer wässrigen Zusammensetzung nach einem der Ansprüche 1 bis 7 oder mindestens eines Copolymers nach einem der Ansprüche 8 oder 9 zur hydraulischen Formulierung.

14. Verfahren zur Kontrolle der Verarbeitbarkeit einer hydraulischen Formulierung mit Zusatz mindestens einer wässrigen Zusammensetzung nach einem der Ansprüche 1 bis 7 oder mindestens eines Copolymers nach einem der Ansprüche 8 oder 9 zu einer hydraulischen Formulierung, wobei vorzugsweise die Verarbeitbarkeit der hydraulischen Formulierung für einen Zeitraum von mindestens 1 Stunde, vorzugsweise mindestens 2 Stunden, noch mehr bevorzugt mindestens 3 Stunden, noch weiter bevorzugt mindestens 3,5 oder mindestens 4 Stunden, konstant gehalten wird.

15. Verfahren zur Reduzierung der Abbindezeit einer hydraulischen Formulierung mit Zusatz mindestens einer wässrigen Zusammensetzung nach einem der Ansprüche 1 bis 7 oder mindestens eines Copolymers nach einem der Ansprüche 8 oder 9 zur hydraulischen Formulierung.

## Claims

1. An aqueous composition comprising at least one copolymer, the polymolecularity index P_{I} of which is less than 3, determined by Size Exclusion Chromatography (SEC), obtained by at least one radical polymerisation reaction in water and at a temperature ranging from 10 to 90°C:
(a) of at least one anionic monomer comprising at least one polymerisable olefinic unsaturation and at least one carboxylic acid group and
(b) of at least one monomer of formula (I): 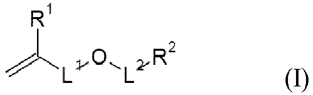 wherein:
- R¹ and R², identical or different, independently represent H or CH₃,
- L¹ independently represents a group chosen among CH₂, CH₂-CH₂ and O-CH₂-CH₂-CH₂-CH₂,
- L² independently represents a group chosen among (CH₂-CH₂O)ₓ, (CH₂CH(CH₃)O)_{y}, (CH(CH₃)CH₂O)_{z} and combinations thereof and
- x, y and z, identical or different, independently represent an integer or decimal comprised between 0 and 150 and the sum of x+y+z is comprised between 10 and 150,
in the presence:
(i) of from 0.05 to 5% by weight, with respect to the amount of monomers, of at least one compound of formula (II): 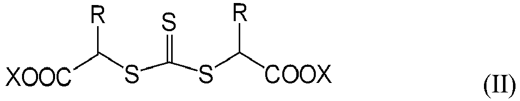 wherein:
- X independently represents H, Na or K and
- R independently represents a C₁-C₅ alkyl group and
(ii) of at least one radical-generating compound chosen among hydrogen peroxide, ammonium persulphate, an alkali metal persulphate, and mixtures or associations thereof with ammonium bisulphite, with an alkali metal bisulphite or with an ion chosen among Fe^{II}, Fe^{III}, Cu^{I}, Cu^{II}.

2. The composition according to claim 1, comprising no homopolymer of monomer (a).

3. The composition according to one of claims 1 and 2, wherein the polymerisation reaction uses:
- from 1 to 25% by weight of monomer (a) and
- from 75 to 99% by weight of monomer (b).

4. The composition according to one of claims 1 to 3, wherein the copolymer comprises:
- from 1 to 25% by weight of monomer (a) and
- from 75 to 99% by weight of monomer (b) or
comprising less than 2,000 ppm by weight or less than 1,500 ppm by weight, preferably less than 1,000 ppm by weight or less than 500 ppm by weight, in particular less than 200 ppm by weight or less than 100 ppm by weight, of residual monomer (a) with respect to the amount by dry weight of copolymer.

5. The composition according to one of claims 1 to 4, wherein the monomer (a) used is chosen among acrylic acid, methacrylic acid, itaconic acid, maleic acid, an acrylic acid salt, a methacrylic acid salt, an itaconic acid salt, a maleic acid salt and mixtures thereof.

6. The composition according to one of claims 1 to 5, wherein
- x is strictly greater than y+z or wherein
- the radical polymerisation reaction in water is used at a temperature ranging from 30 to 85°C, preferably from 40 to 75°C or from 50 to 70°C, or at a temperature ranging from 35 to 85°C, from 40 to 85°C, from 45 to 85°C, from 50 to 85°C, from 60 to 85°C or from 35 to 70°C, from 40 to 70°C, from 45 to 70°C, from 50 to 70°C, from 60 to 70°C.

7. The composition according to one of claims 1 to 6, wherein the polymerisation reaction also uses another anionic monomer, preferably a monomer chosen among acrylic acid, methacrylic acid, itaconic acid, maleic acid and mixtures thereof or wherein the polymerisation reaction also uses at least one other monomer (c) chosen among:
• another anionic monomer, preferably chosen among acrylic acid, methacrylic acid, itaconic acid, their salts and mixtures thereof,
• a non-ionic monomer comprising at least one polymerisable olefinic unsaturation, preferably at least one polymerisable ethylenic unsaturation and in particular a polymerisable vinyl group, more preferentially a non-ionic monomer chosen among the esters of an acid comprising at least one monocarboxylic acid group, in particular an ester of an acid chosen among acrylic acid, methacrylic acid and mixtures thereof, for example hydroxyethyl acrylate, hydroxypropyl acrylate, hydroxyethyl methacrylate, hydroxypropyl methacrylate, styrene, vinyl caprolactam, alkyl acrylate, in particular C₁-C₁₀-alkyl acrylate, preferentially C₁-C₄-alkyl acrylate, more preferentially methyl acrylate, ethyl acrylate, propyl acrylate, isobutyl acrylate, n-butyl acrylate, alkyl methacrylate, in particular C₁-C₁₀-alkyl methacrylate, preferentially C₁-C₄-alkyl methacrylate, more preferentially methyl methacrylate, ethyl methacrylate, propyl methacrylate, isobutyl methacrylate, n-butyl methacrylate, aryl acrylate, preferably phenyl acrylate, benzyl acrylate, phenoxyethyl acrylate, aryl methacrylate, preferably phenyl methacrylate, benzyl methacrylate, phenoxyethyl methacrylate, a compound of formula (III):
Q¹-(L¹)ₘ-(L²)ₙ-Q² (III)
wherein:
- Q¹ represents a polymerisable acrylate group or a polymerisable methacrylate group,
- Q² represents an H group or a CH₃ group,
- L¹ and L², identical or different, independently represent an ethylene-oxy group or a propylene-oxy group and
- m and n, identical or different and of which at least one is different to 0, represent a number less than or equal to 150 and their sum m+n is less than 150 and
• 2-acrylamido-2-methylpropanesulphonic acid, a salt of 2-acrylamido-2-methylpropanesulphonic acid, 2-(methacryloyloxy)ethanesulphonic acid, a salt of 2-(methacryloyloxy)ethanesulphonic acid, sodium methallyl sulphonate, styrene sulphonate and mixtures thereof.

8. A copolymer the polymolecularity index P_{I} of which is less than 3, determined by Size Exclusion Chromatography (SEC), obtained by at least one radical polymerisation reaction in water and at a temperature ranging from 10 to 90°C:
(a) of at least one anionic monomer comprising at least one polymerisable olefinic unsaturation and at least one carboxylic acid group and
(b) of at least one monomer of formula (I): 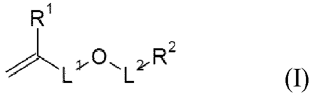 wherein:
- R¹ and R², identical or different, independently represent H or CH₃,
- L¹ independently represents a group chosen among CH₂, CH₂-CH₂ and O-CH₂-CH₂-CH₂-CH₂,
- L² independently represents a group chosen among (CH₂-CH₂O)ₓ, (CH₂CH(CH₃)O)_{y}, (CH(CH₃)CH₂O)_{z} and combinations thereof and
- x, y and z, identical or different, independently represent an integer or decimal comprised between 0 and 150, preferably x is strictly greater than y+z and the sum of x+y+z is comprised between 10 and 150,
in the presence:
(i) of from 0.05 to 5% by weight, with respect to the amount of monomers, of at least one compound of formula (II): 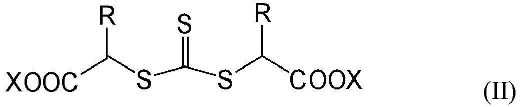 wherein:
- X independently represents H, Na or K and
- R independently represents a C₁-C₅ alkyl group and
(ii) of at least one radical-generating compound chosen among hydrogen peroxide, ammonium persulphate, an alkali metal persulphate, and mixtures or associations thereof with ammonium bisulphite, with an alkali metal bisulphite or with an ion chosen among Fe^{II}, Fe^{III}, Cu^{I}, Cu^{II}.

9. The copolymer according to claim 8, comprising:
- from 1 to 25% by weight of monomer (a) and
- from 75 to 99% by weight of monomer (b).

10. A formulation comprising:
- at least one aqueous composition according to one of claims 1 to 7 or at least one copolymer according to one of claims 8 and 9,
- at least one hydraulic binder, optionally
- water, optionally
- at least one aggregate, optionally
- at least one admixture.

11. The formulation according to claim 10, comprising:
- from 0.01 to 5% by dry weight of copolymer, respectively in the form of at least one aqueous composition according to one of claims 1 to 7 or of at least one copolymer according to one of claims 8 and 9 per se, and
- from 95 to 99.9% by dry weight of at least one hydraulic binder.

12. The formulation according to one of claims 10 and 11, comprising water in an amount by weight, with respect to the amount by weight of the hydraulic binder, of less than 0.7, less than 0.65 or less than 0.6, preferably less than 0.5 or less than 0.4, or else less than 0.3 or less than 0.2, or else ranging from 0.2 to 0.65 or from 0.2 to 0.6 or from 0.2 to 0.5 or from 0.3 to 0.65 or from 0.3 to 0.6 or from 0.3 to 0.5.

13. A method for changing the rheology of a hydraulic formulation, comprising the addition of at least one aqueous composition according to one of claims 1 to 7 or of at least one copolymer according to one of claims 8 and 9 in the hydraulic formulation.

14. A method for controlling the workability of a hydraulic formulation, comprising the addition of at least one aqueous composition according to one of claims 1 to 7 or of at least one copolymer according to one of claims 8 and 9 in a hydraulic formulation, preferably the workability of the hydraulic formulation is kept constant for at least 1 hour, preferably for at least 2 hours, more preferentially for at least 3 hours, even more preferentially for at least 3.5 hours or at least 4 hours.

15. A method for reducing the setting time of a hydraulic formulation comprising the addition of at least one aqueous composition according to one of claims 1 to 7 or of at least one copolymer according to one of claims 8 and 9 in a hydraulic formulation.
